(19) **Europäisches Patentamt**
**European Patent Office**
**Office européen des brevets**

(11) **EP 4 451 554 A2**

(12) **EUROPEAN PATENT APPLICATION**

(43) Date of publication:
**23.10.2024 Bulletin 2024/43**

(51) International Patent Classification (IPC):
**H02S 50/00** *(2014.01)* **H02S 50/10** *(2014.01)*

(21) Application number: **24171340.3**

(22) Date of filing: **19.04.2024**

(52) Cooperative Patent Classification (CPC):
**H02S 50/00; H02S 50/10;** Y02E 10/50

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **19.04.2023 CN 202310421047**

(71) Applicant: **Suzhou Jsolar Incorporated Suzhou, Jiangsu 215611 (CN)**

(72) Inventors:
• **Peng, Cheng**
 **Zhangjiagang, Suzhou, Jiangsu, 215611 (CN)**
• **Wang, Wenchang**
 **Zhangjiagang, Suzhou, Jiangsu, 215611 (CN)**
• **Fang, Liuhuang**
 **Zhangjiagang, Suzhou, Jiangsu, 215611 (CN)**

(74) Representative: **Wang, Bo**
 **Panovision IP**
 **Ebersberger Straße 3**
 **85570 Markt Schwaben (DE)**

(54) **PHOTOVOLTAIC BRACKET TRACKING SYSTEMS**

(57) One or more embodiments of the present disclosure provide a PV racking tracking system, comprising: an angle determination module configured to determine a target angle for tracking of a PV bracket; a drive module configured to drive the PV bracket to rotate according to the target angle; a control module configured to be in communicating connection with the angle determination module for sending a control instruction to the drive module; and a power supply module configured to supply power to the drive module and the control module.

**10**

**FIG. 1**

EP 4 451 554 A2

**Description**

**TECHNICAL FIELD**

The present disclosure relates to the technical field of photovoltaic (PV) power generation, and in particular to a PV bracket and a PV bracket tracking system.

**BACKGROUND**

PV power generation is a technology that converts light energy directly into electrical energy using the PV effect. A PV power generation system configured based on the technology may include a PV panel (or referred to as a PV component) and a PV bracket. The PV panel is configured to receive solar radiation to generate electrical energy, and the PV bracket is configured to support the PV panel.

In the practical application of the PV power generation system, the tilt angle (i.e., the angle between the PV panel and the ground plane) of the PV panel needs to be adjusted due to a variety of reasons. For example, the tilt angle of the PV panel needs to be changed to enable the PV panel to receive more solar radiation when the position of the sun changes. The tilt angle of the PV panel can be adjusted by rotating the rotation axis of the PV bracket to drive the PV panel to rotate.

The rotation axis movement of the PV bracket may include north-south tracking and east-west tracking. Taking the north-south tracking manner as an example, at present, the frequency (i.e., the change frequency of the tilt change of the PV panel) of north-south tracking of the PV bracket is low, about once a quarter or once a day. The frequency of once a quarter is too low, which increases the tracking granularity of the tilt angle of the PV panel, and enables a tilt angle change curve to be unsmooth, resulting in the low power generation of the PV power generation system. The algorithm for north-south tracking of the PV bracket based on once-a-day adjustment usually calculates the tilt angle of the PV panel based on the daily average altitude angle (i.e., the daily average solar altitude angle). The problem of the algorithm is that different PV panels with different tilt angles exhibit different power generation gains relative to different solar altitude angles. For example, the power generation of the PV panels with large tilt angles is affected by the occlusion (e.g., the occlusion of other PV panels) of the PV panels for a relatively long time, and a certain proportion of reduction needs to be done when the daily tilt angle is calculated. Accordingly, the tilt angles of the PV panels calculated based on the algorithm have a relatively weak effect on the power generation gain.

Therefore, the present disclosure provides a PV bracket tracking system, which is capable of effectively reducing the granularity of the tilt angle of the PV panel, thereby increasing the power generation of the PV power generation system.

**SUMMARY**

One of the embodiments of the present disclosure provides a PV bracket tracking system, comprising: an angle determination module configured to determine a target angle for tracking of a PV bracket; a drive module configured to drive the PV bracket to rotate according to the target angle; a control module in communication connection with the angle determination module, the control module being configured to send a control instruction to the drive module; and a power supply module configured to supply power to the drive module and the control module.

**BRIEF DESCRIPTION OF THE DRAWINGS**

The present disclosure will be further illustrated by way of exemplary embodiments, which will be described in detail by means of the accompanying drawings. These embodiments are not limiting, and in these embodiments, the same numbering indicates the same structure, wherein:

FIG. 1 is a structural diagram illustrating an exemplary PV bracket tracking system according to some embodiments of the present disclosure;

FIG. 2 is a schematic diagram illustrating a processing process of a simulation model according to some embodiments of the present disclosure;

FIG. 3 is a schematic diagram illustrating a processing process of a simulation model according to some embodiments of the present disclosure;

FIG. 4 is a schematic diagram illustrating a processing process of a simulation model according to some embodiments of the present disclosure;

FIG. 5 is a schematic diagram illustrating a position of a PV bracket relative to the sun according to some embodiments of the present disclosure;

FIG. 6 is a simple schematic diagram illustrating three PV panels arranged side by side in an east-west direction according to some embodiments of the present disclosure;

FIG. 7 is a schematic diagram illustrating an application scenario of a PV bracket tracking system according to some embodiments of the present disclosure;

FIG. 8 is a schematic diagram illustrating a topology of a PV bracket tracking system according to some embodiments of the present disclosure;

FIG. 9 is a schematic diagram illustrating a motor drive circuit according to some embodiments of the present disclosure;

FIG. 10 is a schematic diagram illustrating a motor drive circuit according to some embodiments of the present disclosure;

FIG. 11 is a schematic diagram illustrating a deployment of a PV subarray communication system according to some embodiments of the present disclosure; and

FIG. 12 is a schematic diagram illustrating a deployment of a controller according to some embodiments of the present disclosure.

## DETAILED DESCRIPTION

In order to more clearly illustrate the technical solutions of the embodiments of the present disclosure, the following briefly introduces the drawings that need to be used in the description of the embodiments. Apparently, the accompanying drawings in the following description are only some examples or embodiments of the present disclosure, and those skilled in the art can also apply the present disclosure to other similar scenarios according to the drawings without creative efforts. Unless obviously obtained from the context or the context illustrates otherwise, the same numeral in the drawings refers to the same structure or operation.

It should be understood that the terms "system," "device," and/or "module" as used herein are a method of distinguishing between different levels of components, parts, sections, or assemblies. "module" as used herein is a method for distinguishing between different components, elements, parts, sections or assemblies at different levels. However, the words may be replaced by other expressions if other words would accomplish the same purpose.

As shown in the present disclosure and the claims, unless the context clearly suggests an exception, the words "a", "an", "one", and/or "the" do not refer specifically to the singular form, but may also include the plural form. In general, the terms "including" and "comprising" only suggest the inclusion of explicitly identified steps and elements that do not constitute an exclusive list, and the method or apparatus may also include other steps or elements.

PV power generation is a technology that converts light energy directly into electrical energy using the PV effect. A PV power generation system configured based on the technology may include a PV panel (or referred to as a PV component) and a PV bracket. The PV panel may be configured to receive solar radiation to generate electrical energy, and the PV bracket may be configured to support the PV panel. In some embodiments, a tilt angle of the PV panel may be fixed. In some embodiments, the tilt angle of the PV panel is adjustable. For example, the tilt angle of the PV panel may be adjusted as the position of the sun changes for the PV panel to receive more solar radiation and generate more power. As another example, the tilt angle of the PV panel may be adjusted to prevent damage to the PV panel during extreme weather (e.g., high winds and hail). In some embodiments, the PV bracket may include a rotation axis, and the PV panel may be connected with the rotation axis of the PV bracket. When the rotation axis rotates, the PV panel may be driven to rotate around a central axis of the rotation axis, thereby changing the tilt angle of the PV panel.

In some embodiments, a movement of the rotation axis may include east-west tracking and north-south tracking. East-west tracking refers to that the rotation axis of the PV bracket rotates around longitudinal lines. For example, the PV bracket may rotate in an east-west normal direction of the sun. In some embodiments, the frequency of east-west tracking may be once a day. North-south tracking refers to that the rotation axis of the PV bracket rotates around the latitudinal lines. For example, the PV bracket may rotate in a north-south normal direction of the sun. It should be noted that, unless otherwise specified, the movement of the rotation axis of the PV bracket in the present disclosure is north-south tracking. In some embodiments, a frequency (i.e., a change frequency of the tilt angle of the PV panel) of north-south tracking is low, about once a quarter, which increases a tracking granularity of the tilt angle of the PV panel, and enables a tilt angle change curve to be unsmooth, resulting in a low power generation of the PV power generation system. In some embodiments, an algorithm for north-south tracking of the PV bracket based on once-a-day adjustment usually calculates the tilt angle of the PV panel based on a daily average altitude angle (i.e., a daily average solar altitude angle). The problem of the algorithm is that different PV panels with different tilt angles may exhibit different power generation gains relative to different solar altitude angles. For example, the power generation of the PV panels with large tilt angles may be affected by the occlusion (e.g., the occlusion of other PV panels) of the PV panels for a relatively long time, and a certain proportion of reduction needs to be done when the daily tilt angle is calculated. Accordingly, the tilt angles of the PV panels calculated based on the algorithm may have a relatively weak effect on the power generation gain, resulting in power generation loss of the PV power generation system.

In order to solve the problem of power generation loss of the PV power generation system based on north-south tracking, the present disclosure provides a PV bracket tracking system applicable to north-south tracking, which can effectively reduce the tracking granularity of the PV power generation system, and achieve a higher frequency adjustment of the rotation axis of the PV bracket, thereby improving the power generation efficiency of the PV panel, and effectively solving the problem of power generation loss caused by quarterly adjustment of the PV bracket based on north-south tracking.

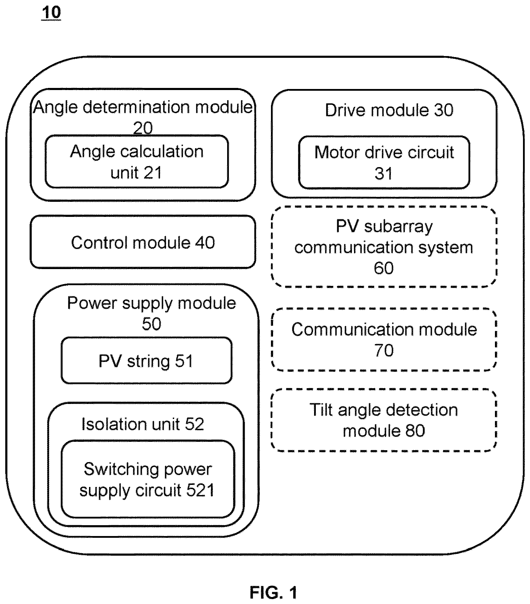

FIG. 1 is a structural diagram illustrating an exemplary PV bracket tracking system according to some embodiments of the present disclosure. In some embodiments, as illustrated in FIG. 1, a PV bracket tracking system 10 may include an angle determination module 20, a drive module 30, a control module 40, and a power supply module 50. The angle determination module 20 may be configured to determine a target angle for tracking of a PV bracket. The drive module 30 may be configured to drive the PV bracket to rotate according to the target angle. The control module 40 may be in communication connection with the angle determination module 20 for sending a control instruction to the drive module 30. The drive module 30 may control a rotation axis of the PV bracket to rotate based on the control instruction. The power supply module 50 may be configured to supply power to the drive module 30 and the control module 40.

In some embodiments, the power supply module 50 may obtain electrical energy, and then transmit the electrical energy to the drive module 30 and the control module 40 to provide the energy needed for operation of the PV bracket tracking system 10. The angle determination module 20 may calculate the target angle of the rotation axis of the PV bracket and send the target angle to the control module 40. The control module 40 may send the control instruction to the drive module 30 based on the target angle of the rotation axis of the PV bracket. The control instruction may be configured to instruct the drive module 30 to drive the rotation axes of the one or more PV brackets to rotate the target angle at a specific time (e.g., a current time and a preset time). When the drive module 30 receives the control instruction, the drive module 30 may drive the rotation axis of the PV bracket to rotate as instructed by the control instruction.

In some embodiments, as illustrated in FIG. 1, the angle determination module 20 may include an angle calculation unit 21. The angle calculation unit 21 may be configured to determine a target angle for north-south tracking. In some embodiments, the angle calculation unit 21 may be configured to determine the target angle based on one or more of a geographic location, historical meteorological information, historical irradiation information, PV array device information, PV array mounting arrangement information, current meteorological information, current irradiation information, ground material information, a current time, current cloud cover distribution information, and environmental information.

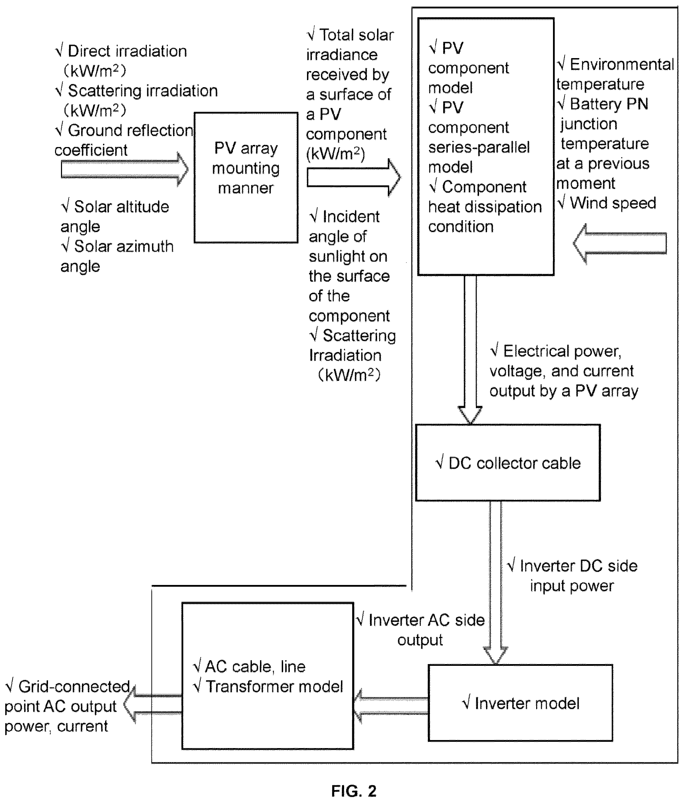

In some embodiments, the angle calculation unit 21 may determine, using a first preset algorithm, the target angle based on one or more of latitude and longitude information, the historical meteorological information, the historical irradiation information, the PV array device information, the PV array mounting arrangement information, the ground material information, and the environmental information. In some embodiments, the first predetermined algorithm may include a simulation model. The angle calculation unit 21 may determine, based on set data, fixed data, and current detection data, electrical output parameters (i.e., power generation data) of PV panels corresponding to different PV panel tilting angles through the simulation model, and then determine the target angle of the PV panels based on the electrical output parameters of the PV panels corresponding to the different PV panel tilting angles. More descriptions regarding the first preset algorithm may be found in FIGs. 2-4 and embodiments thereof.

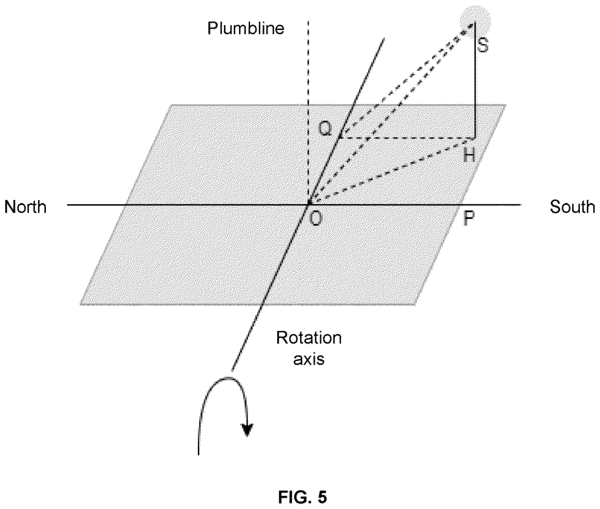

In some embodiments, the preset algorithm may further include a second preset algorithm. The angle calculation unit 21 may also be configured to determine, using the second preset algorithm, a target angle for north-south tracking based on a solar altitude angle, a solar azimuth angle, sizes and layout information of the PV panels, the current irradiation information, the cloud cover distribution information, the current meteorological information, and the environmental information. In some embodiments, the angle calculation unit 21 may determine a real-time tilt angle most favorable for receiving solar irradiation based on the solar altitude angle and the solar azimuth angle, and calculate an inverse shadow occlusion angle based on the size and layout information of the PV panels. More descriptions regarding the second preset algorithm may be found in FIGs. 5-6 and embodiments thereof.

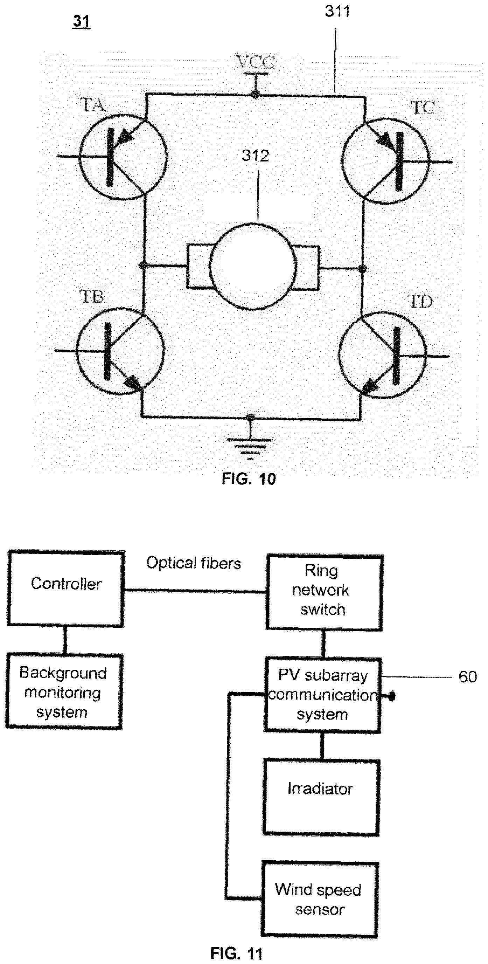

In some embodiments, as illustrated in FIG. 1, the PV bracket tracking system 10 may further include a PV subarray communication system 60. The PV subarray communication system 60 may serve as a host to poll a controller, and send information for determining the target angle for north-south tracking to the controller, and/or serve as a transfer system to send the control instruction from a background monitoring system to the controller. The controller may be a structure including modules such as the angle tracking module 20, the drive module 30, the control module 40, and the power supply module 50 in the preceding embodiment. More descriptions regarding the PV subarray communication system 60 and the background monitoring system may be found in FIGs. 11-12 and embodiments thereof.

In some embodiments, as illustrated in FIG. 1, the PV racking tracking system 10 may further include a communication module 70. The communication module 70 may communicate with the PV subarray communication system 60 and the control module 40 using a communication manner of wireless connection or wired connection to realize data exchange with the PV subarray communication system 60 and the control module 40. In some embodiments, the wired connection may include a metallic cable, an optical cable, or a hybrid of metallic and optical cables, such as one of coaxial cable, a communication cable, a flexible cable, a spiral cable, a non-metallic sheathed cable, a metal-sheathed cable, a multi-core cable, a twisted-pair cable, a ribbon cable, a shielded cable, a telecommunication cable, a double-stranded cable, a twin-lead cable, a twisted pair, or any combination thereof. In some embodiments, the wireless connection may include radio communication, free space optical communication, acoustic communication, electromagnetic induction, etc. The radio communication may include IEEE802.11 series standards, IEEE802.15 series standards (e.g., Bluetooth and cellular technologies, etc.), first generation mobile communication technologies, second generation mobile communication technologies (e.g., FDMA, TDMA, SDMA, CDMA, SSMA, etc.), universal packet radio service technologies, third generation mobile communication technologies (e.g. CDMA2000, WCDMA, TD-SCDMA, WiMAX, etc.), fourth-generation mobile communication technologies (e.g., TD-LTE and FDD-LTE, etc.), satellite communication (e.g., GPS technology, etc.), near-field communication (NFC), and other technologies operating in the ISM frequency band (e.g., 2.4 GHz, etc.). The free-space optical communication may include visible light, infrared signals, etc. The acoustic communication may include acoustic waves, ultrasonic signals, etc. The electromagnetic induction may include NFC technologies, etc. The described examples are provided for convenience of illustration only, and the media of the wireless connection may include other types, e.g., Z-wave technology, other tolled civilian radio bands, military radio bands, etc. Merely by way of example, the communication module 70 may perform communication using Long Range Radio (LoRa) wireless communication technology to reduce energy consumption. In some embodiments, a communication frequency band of the communication module 70 may be within a range of 410 MHz-525 MHz, 803 MHz-930 MHz, and 2.4 GHz.

In some embodiments, the control module 40 may set networking information of a LoRa wireless module to enable communication with the PV subarray communication system 60. Data interaction between the PV subarray communication system 60 and the controller may be realized without deploying communication cables.

In some embodiments, as illustrated in FIG. 1, the PV racking tracking system 10 may further include a tilt angle detection module 80. The tilt angle detection module 80 may communicate and interact with the control module 60. The tilt angle detection module 80 may be configured to detect current tilt angles of the PV panels, i.e., a current angle of the PV bracket. In some embodiments, the tilt angle detection module 80 may include an acceleration sensor. The acceleration sensor may be disposed parallel to surfaces of the PV panels. The acceleration sensor may feed back a component of gravity acceleration in a plane in which the surfaces of the PV panels are located. The tilt angle detection module 80 may calculate, through sine-cosine inverse transform, an angle between the surfaces of the PV panels and a ground plane, i.e., the current tilt angles of the PV panels. In some embodiments, a plurality of acceleration sensors may be provided to ensure that in case of failure of one acceleration sensor, the current tilt angles of the PV panels may not exceed a maximum tilt angle.

In some embodiments, the tilt angle detection module 80 may include a gyroscope. When the gyroscope moves with the PV panels, the gyroscope may measure angular velocities of the PV panels rotating around the rotation axis of the PV bracket. Rotation angles of the PV panels may be obtained by integrating the angular velocities.

In some embodiments, the angle calculation unit 21 may be configured to determine a daily target angle for north-south tracking based on one or more of the geographic location, the historical meteorological information, the historical irradiation information, the PV array device information, the PV array mounting arrangement information, the current meteorological information, the current irradiation information, the ground material information, the current time, the current cloud cover distribution information, and the environmental information. In some embodiments, the daily target angle for north-south tracking may be determined in multiple dimensions by combining one or more of the geographic location, the historical meteorological information, the historical irradiation information, the PV array device information, the PV array mounting arrangement information, the current meteorological information, the current irradiation information, the ground material information, the current time, the current cloud cover distribution information, and the environmental information, so that the influence caused by the situation that different target angles exhibit different power generation gains relative to different solar altitude angles can be effectively avoided, and the power generation of the PV panels can be effectively improved.

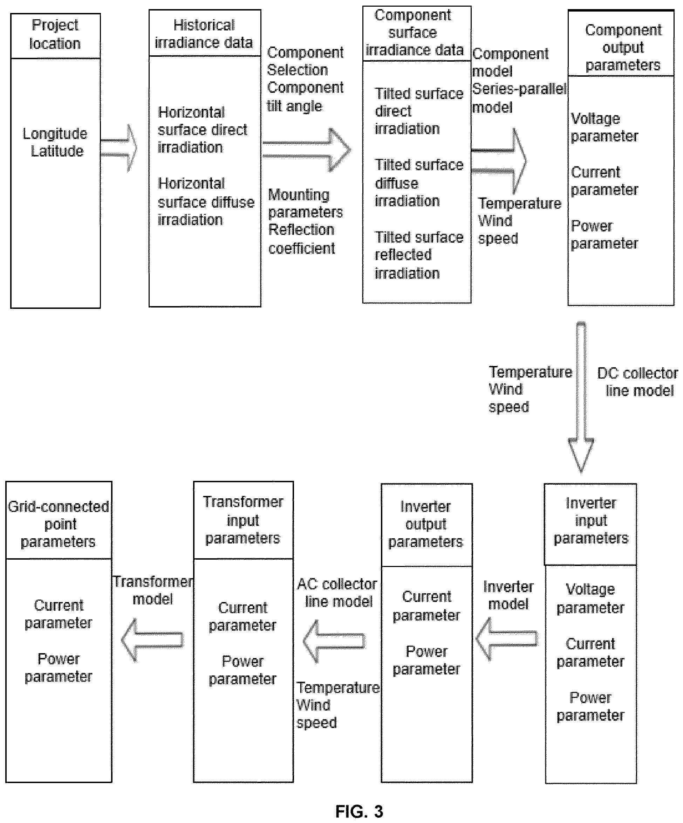

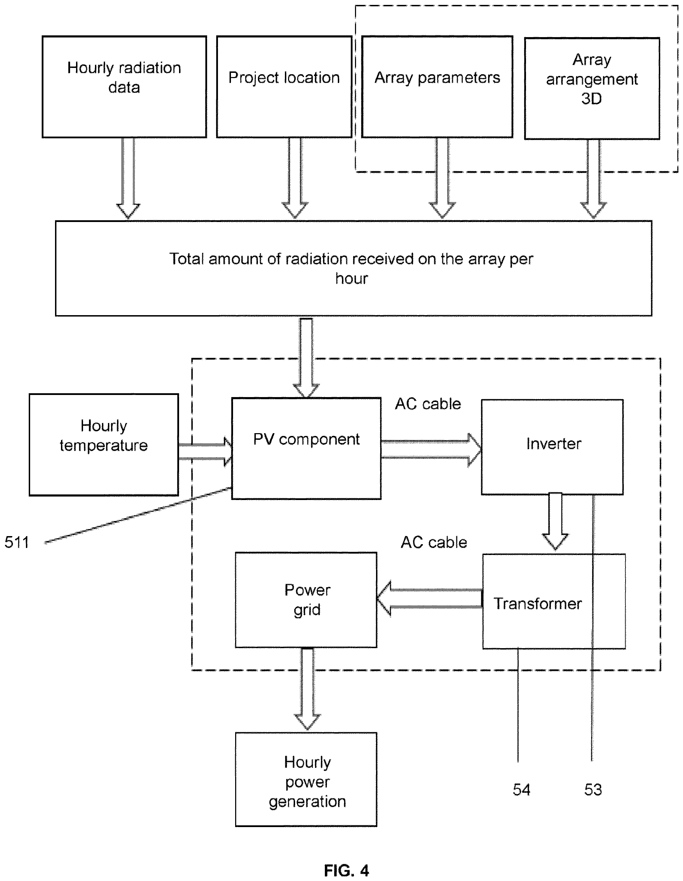

The geographic location refers to information related to a position where the PV bracket is located. In some embodiments of the present disclosure, the geographic location may be referred to as a project site (as illustrated in FIG. 4) or a project location (as illustrated in FIG. 3). In some embodiments, the geographic location may include regional information, latitude and longitude information (e.g., longitude and latitude in FIG. 3), elevation information, barometric pressure information, etc., of the position where the PV bracket is located. The regional information refers to information related to a region of the location of the PV bracket. The region may include a Northwest region, a North China region, a Southwest region, a Southern region, a Norther region, etc. The latitude and longitude information refers to latitude and longitude of the position where the PV bracket is located. The elevation information refers to an elevation of the position where the PV bracket is located. The barometric pressure information refers to an air pressure of the position where the PV bracket is located.

The historical meteorological information refers to meteorological information of the position where the PV bracket is located in a certain time period in the past. The current meteorological information refers to meteorological information of the position where the PV bracket is located at the current time. The meteorological information refers to a weather condition of the position where the PV bracket is located, such as air temperature, air pressure, humidity, wind speed, etc.

The historical irradiation information refers to solar radiation illuminance data of the position where the PV bracket is located in the certain time period in the past. The radiation illumination (or irradiance) refers to a radiant flux per unit area of an irradiated surface. The radiation illumination indicates an intensity of solar radiation. The greater the radiation illumination, the more intense the solar radiation. On the contrary, the smaller the radiation illumination, the weaker the solar radiation. In some embodiments of the present disclosure, the historical irradiation information may be referred to as historical irradiation data, as illustrated in FIG. 3.

In some embodiments, the historical irradiation information may include horizontal surface direct irradiation, horizontal surface diffuse irradiation, or the like. The horizontal surface direct irradiation refers to direct sunlight irradiation received per unit area of a horizontal surface. The horizontal surface diffuse irradiation refers to diffuse sunlight irradiation received per unit area of the horizontal surface. Diffuse sunlight refers to a portion of solar radiation that reaches the surface from all angles of the sky when passing through the atmosphere and subjected to scattering by gases, dust, aerosols, and so on in the atmosphere.

In some embodiments, the historical irradiation information is time-by-time information (e.g., an hourly set of data) that may be obtained from a database (e.g., a NASA database, a World Bank database). Merely by way of example, direct irradiance data of the horizontal surface for the certain time period in the past (e.g., 10 years, 20 years, 30 years) may be stored in the database, and thus the angle calculation unit 21 may directly extract the direct irradiance data corresponding to the current time from the database as historical direct irradiance. For example, if the current time is October 1, the angle calculation unit 21 may extract an average of the direct irradiance data on October 1 of each of the past five years from the database as the historical direct irradiance. As another example, the angle calculation unit 21 may weight the direct irradiance data on May 1 of each of the past 5 years. The older the data, the lower the weight, and the closer the time to the current date, the higher the weight of the data, and a final value obtained may be the historical direct irradiance.

Ground reflection information (or the ground material information) refers to information that affects an intensity of reflected light (also referred to as reflected irradiance) on the PV panels. For example, the ground reflection information may include a component angle, bracket mounting information, and a ground reflectivity (or a reflection coefficient). The reflected irradiance refers to irradiance of reflected sunlight received per unit area of the PV panels. The reflected sunlight refers to sunlight of solar radiation that strikes the surface of an object after being reflected by the ground plane (or an adjacent component). In some embodiments, the ground plane may include a concrete surface, a water surface, a grass surface, a cement surface, an ice surface, or the like. The ground reflectivity refers to a ratio of the reflected irradiance to total solar irradiance per unit area (or total solar irradiance received per unit area of the surface of the PV component). The reflection coefficient may reflect the capacity of the ground to reflect solar radiation. In some embodiments, if the total solar irradiance is constant, the higher the reflection coefficient, the higher the reflected sunlight irradiance, the higher the reflected sunlight irradiance received by the PV panels, while the lower the reflection coefficient, the lower the reflected sunlight irradiance, and the lower the reflected sunlight irradiance received by the PV panels.

In some embodiments, the reflection coefficient may be related to a type and a material of the ground. For example, the reflection coefficient of the water surface is greater than the reflection coefficient of the grass surface. As another example, the reflection coefficient of the ice surface is greater than the reflection coefficient of the concrete surface. In some embodiments, the corresponding reflection coefficient may be directly determined based on the type and the material of the ground plane supporting the PV bracket. For example, the reflection coefficients of different materials and types of ground may be obtained in advance through experiments, etc., and may be used for construction of the simulation model.

The current cloud cover distribution information refers to a cloud distribution at the position where the PV bracket is located at the current time. Cloud cover refers to a proportion of clouds obscuring the view of the sky.

The environmental information refers to an environmental condition of the position where the PV bracket is currently located. In some embodiments, the environmental information may include an environmental temperature, an environmental humidity, an environmental wind speed, or the like. In some embodiments, the environmental information may be obtained from the database. In some embodiments, the environmental information may be obtained from a sensor. For example, the environmental temperature may be obtained through a temperature sensor provided at a meteorological station. As another example, the environmental wind speed may be obtained through a wind speed sensor provided at the meteorological station.

The current irradiation information refers to solar irradiance data of the position where the PV bracket is located at the current time. In some embodiments, the current irradiation information may be total horizontal surface irradiance data. The total horizontal surface irradiance data refers to total sunlight irradiance received by a horizontal surface of the PV component. In some embodiments, the current irradiation information may include total PV panel front irradiance data and total PV panel reverse irradiance data. The total PV panel front irradiance data refers to total sunlight irradiance received by a front surface (the surface directly irradiated by the sun) of the PV component. The total PV panel reverse irradiance data refers to total sunlight irradiance received by a reverse surface (the surface not directly irradiated by the sun) of the PV component. In some embodiments, the current irradiation information may include the total horizontal surface irradiance data, the total PV panel front irradiance data and the total PV panel reverse irradiance data. In some embodiments, the current irradiation information may include component surface irradiance data. The component surface irradiance data refers to sunlight irradiance received by the surface of the PV component at the current time. In some embodiments, the component surface irradiance data may be a sum of tilted surface direct irradiance, tilted surface diffuse irradiance, and tilted surface reflected irradiance. The tilted surface direct irradiance refers to direct sunlight irradiance received by surfaces of the PV panels at the current time. A tilted surface refers to that the surfaces of the PV panels that are non-parallel to the ground plane. The tilted surface diffuse irradiance refers to diffuse sunlight irradiance received by the surfaces of the PV panels at the current time. The tilted surface reflected irradiance refers to reflected sunlight irradiance received by the surfaces of the PV panels at the current time.

In some embodiments, the current irradiation information may be calculated based on multiple types of information. For example, in the embodiment shown in FIG. 3, the simulation model may combine historical irradiation data, module selection, module inclination, mounting parameters, and reflection coefficients (i.e., ground reflection information) to determine module surface irradiation data, as can be seen in FIG. 3 and its embodiment description for more details.

In some embodiments, the angle calculation unit 21 may determine the target angle in combination with solar position information. The solar position information refers to information that reflects a position of the sun at the current time. In some embodiments, the solar position information may include a solar altitude angle and a solar azimuth angle. The solar altitude angle refers to an angle between an incident direction of sunlight at the position where the PV bracket is located and the ground plane. For ease of illustration, the solar altitude angle may be represented by LSOH in FIG. 5, wherein a point S represents the position of the sun, a point O represents the position where the PV bracket is located on the ground plane, a solid line P is a longitudinal line passing through the point O, a point H is a vertical projection of the sun on the ground plane, and a point Q is an intersection position between a vertical line from the sun to the rotation axis of the PV bracket and the rotation axis of the PV bracket. The solar azimuth angle refers to an angle between a projection of sunlight on the horizontal plane and local meridians (i.e., the longitudinal line). For ease of illustration, the solar azimuth angle may be represented by LHOP in FIG. 5. In some embodiments, the solar position information may be obtained from the database. For example, the angle calculation unit 21 may obtain historical solar position information corresponding to the current time from the database and use the historical solar position information as the solar position information at the current time.

In some embodiments, the angle calculation unit 21 may determine the target angle of the PV component using only the solar position information. Descriptions regarding the process may be found in FIG. 5 and descriptions of embodiments thereof. In some embodiments, the angle calculation unit 21 may determine the target angle in combination with information such as the geographic location, the historical irradiation information, the current irradiation information, the ground reflection information, the environmental information, etc. More descriptions regarding the process may be found in FIG. 3 and descriptions of embodiments thereof.

In some embodiments, the angle calculation unit 21 may determine the target angle in combination with PV subarray device selection (or referred to as the PV array device information), PV subarray deployment (or referred to as the PV array mounting arrangement information), and/or collector line deployment.

In some embodiments, a PV subarray device may include the PV component, a transformer, an inverter, or the like. The PV subarray device selection may relate to component selection, information on a PV component model (or referred to as a component model), information on a PV component series-parallel model (or referred to as the series-parallel model), information on a component heat dissipation condition, selection of the inverter, selection of the transformer, selection of an inverter model and a transformer model, etc. The component selection refers to structural selection of the PV panels, such as surface areas of the PV panels, radiation absorption efficiency of the PV panels, or the like. The component model refers to a PV panel model, and the component model may reflect structures of PV panels. The component model may be related to module selection. The series-parallel model may be configured to reflect series-parallel connection of a plurality of PV panels. The component heat dissipation condition refers to heat dissipation of the component. In some embodiments, the component heat dissipation condition may include heat dissipation power, a minimum operating temperature of the component, and a maximum operating temperature of the component. In some embodiments, the PV subarray device selection may be obtained directly from the database.

The PV subarray deployment refers to a PV array mounting manner (or referred to as a mounting parameter). In some embodiments, the PV subarray deployment may include a PV array circuit parameter (or referred to as an array parameter) and a PV array structural parameter (or referred to as array arrangement 3D). For example, the array parameter may include the series-parallel connection of the PV panels, and the array arrangement 3D may include a spacing between adjacent PV panels, the tilt angles of the PV panels (or referred to as component tilt angles), etc. In some embodiments, the PV subarray deployment may be set artificially or by default by the PV bracket tracking system 10.

The collector line deployment relates to information on deployment of conductors used for energy transmission. In some embodiments, the collector line deployment may include selection of an AC cable (or referred to as an AC pooling cable, an AC line, or an AC collector line), selection of an AC cable model (e.g., AC collector line model), selection of a DC cable (or referred to as a DC pooling cable, a DC line, or a DC collector line), selection of a DC cable model (e.g., a DC collector line model), etc. In some embodiments, the collector line deployment profile may be obtained directly from the database. More details regarding determining the target angle may be found in FIGs. 2-3 and descriptions of embodiments thereof.

In some embodiments, the angle calculation unit 21 may determine, using the first preset algorithm, the target angle for north-south tracking based on one or more of the geographic location, the historical meteorological information, the historical irradiation information, the PV array device information, the PV array mounting arrangement information, the current meteorological information, the current irradiation information, the ground material information, the current time, the current cloud cover distribution information, and the environmental information.

In some embodiments, the first preset algorithm may include a machine learning model. In some embodiments, the angle calculation unit 21 may determine the target angle in a target time period based on a target angle determination model. The angle calculation unit 21 may input one or more of the geographic location, the historical meteorological information, the historical irradiation information, the PV array device information, the PV array mounting arrangement information, the current meteorological information, the current irradiation information, the ground material information, the current time, the current cloud cover distribution information, and the environmental information into the target angle determination model. An output of the target angle determination model may include power generation data in the target time period and the target angle in the target time period. In some embodiments, the target time period may include an hour, a half day, a day, a week, two weeks, a month, or the like. The power generation data in the target time period may reflect power generation of the PV panels at a certain tilt angle for a sustained target time period, such as the power generation of the PV panels at a tilt angle of 30 degrees for a sustained period of one day. In some embodiments, the target angle determination model may determine the power generation of the PV panels for the sustained target time period at a plurality of tilt angles (e.g., 0-90 degrees), and then use a tilt angle corresponding to the maximum power generation as the target angle. In some embodiments, the target angle determination model may directly output power generation data corresponding to the tilt angle corresponding to the maximum power generation and the corresponding target angle.

In some embodiments, the target angle determination model may be a trained machine learning model. The machine learning model may include various models and structures, such as a deep neural network model, a recurrent neural network model, a customized model structure, etc.

In some embodiments, when the target angle determination model is trained, amount of latitude and longitude information, historical irradiation information, current irradiation information, ground reflection information, solar position information, and environmental information with labels (or referred to as identifiers) may be used as training data to train the target angle determination model through gradient descent, so that parameters of the model may be learned.

In some embodiments, the first preset algorithm may include the simulation model. An output of the simulation model may include the power generation data in the target time period. The first preset algorithm may further include iteration. The angle calculation unit may determine the target angle in the target time period by iterating over the power generation data. Merely by way of example, the angle calculation unit 21 may calculate the power generation data of the PV panels for a week using the simulation model, and then the angle calculation unit 21 may determine, based on the power generation data of the PV panels for the week, the target angle of the PV panel in the week, to adjust a rotation angle of the PV bracket once a week. As another example, the angle calculation unit 21 may calculate power generation data of the PV panels for a day using the simulation model, and then the angle calculation unit 21 may determine, based on the power generation data of the PV panels for the day, the target angle of the PV panels for that day, to adjust the rotation angle of the PV bracket once a day. Similarly, the angle calculation unit may also calculate the target angle for half a day, two weeks, and one month, thereby making adjustments at different frequencies.

In some embodiments, the angle calculation unit may iterate over the power generation data output by the simulation model to determine the target angle in the target time period. Merely by way of example, the simulation model may output power generation data during a plurality of target time periods. The power generation data during each of the plurality of target time periods may correspond to a different tilt angle of the PV panels. For example, the angle calculation unit 21 may calculate the tilt angles of the PV panels corresponding to the power generation data during the plurality of target time periods, and arrange the tilt angles of the PV panels in the order of magnitudes of the tilt angles, such as an tilt angle of 1 degree corresponding to a daily power generation of 100 kilowatt-hours, an tilt angle of 2 degrees corresponding to a daily power generation of 103 kilowatt-hours, an tilt angle of 3 degrees corresponding to a daily power generation of 107 kilowatt-hours, ..., until a daily power generation corresponding to a certain tilt angle is smaller than a daily power generation corresponding to a previous tilt angle, the angle calculation unit 21 may use the previous tilt angle as an optimal tilt angle, i.e., the target angle. In some embodiments, when there are a plurality of optimal tilt angles, the angle calculation unit 21 may select a tilt angle corresponding to the maximum daily power generation as the target angle.

In some cases, on the basis of determining the target angle for north-south tracking in multiple dimensions in combination with one or more of the geographic location, the historical meteorological information, the historical irradiation information, the PV array device information, the PV array mounting layout information, the current meteorological information, the current irradiation information, the ground material information, the current time, the current cloud cover distribution information, and the environmental information, the tilt angle corresponding to the maximum daily power generation may be taken as the target angle by continuous iteration of output results of the simulation model, thereby further improving the power generation of the PV panels.

In some embodiments, the target time period may include a plurality of time units. The output of the simulation model may also include a plurality of sets of unit power generation data corresponding to the plurality of time units. The angle calculation unit 21 may be further configured to determine the power generation data in the target time period based on the plurality of sets of unit power generation data. Merely by way of example, the simulation model may calculate daily power generation data of the PV panels for each day of the year, and then the angle calculation unit 21 may determine power generation data of the PV panels for the year based on the power generation data for 365 days. As another example, the simulation model may calculate power generation data of the PV panel for each hour of a day, and then the angle calculation unit 21 may determine the power generation data of the PV panel for the day based on the power generation data for 24 hours. In some embodiments, the angle calculation unit 21 may integrate the unit power generation data output by the simulation model, thereby determining the power generation data in the target time period, and then determining the target angle in the target time period through iteration.

In some embodiments, the target angle in the target time period may include a plurality of unit target angles corresponding to a plurality of time units. A count of time units may be related to the tracking granularity of the PV bracket. For example, the target angle during a day may include a target angle corresponding to each hour. In this case, the granularity of the PV bracket may be hourly, i.e., an adjustment frequency of the rotation axis of the PV bracket may be once an hour.

As another example, the target angle during the day may include a target angle corresponding to each half day. In this case, the granularity of the PV bracket may be every half day, i.e., the adjustment frequency of the PV bracket rotational axis may be once every half day. In some embodiments, by dividing the target time period into a plurality of time units, the power generation data of the PV panels in the target time period may be refined, which makes the tracking granularity of the PV bracket smaller, thereby facilitating further refined control of the target angle for north-south tracking of the PV bracket, and improving the power generation efficiency.

In some embodiments, an input of the simulation model may include the set data, the fixed data, and the current detection data. The set data refers to artificially set data or data defaulted by the PV bracket tracking system. The fixed data refers to data that maintained unchanged. The current detection data refers to data obtained by detection at the current time. The set data may include at least the PV panel tilt angle, the PV panel position, and the PV panel circuit parameter. The fixed data may include the historical irradiation information. The current detection data may include the current irradiation information and the environmental information. The simulation model may be configured to determine electrical output parameters of the PV panels corresponding to different PV panel tilt angles at the different PV panel tilt angles based on the set data, the fixed data, and the current detection data. In some cases, the electrical output parameters of the PV panels corresponding to the different PV panel tilting angles may be calculated through the simulation model, and the tilt angle corresponding to the maximum daily power generation may be determined as the target angle, which can improve the accuracy of the calculation results, and effectively increase the power generation of the PV panels.

The PV panel position refers to latitude and longitude coordinates of positions where the PV panels located. The PV panel circuit parameter refers to an operating parameter of an internal circuit of the PV panels. In some embodiments, the PV panel circuit parameter may include rated power, an open voltage, a rated voltage, a rated current, or the like. In some embodiments, the electrical output parameters (or referred to as component output parameters) of the PV panels may include an output power parameter, an output voltage parameter, an output current parameter, or the like, of the PV panels.

The simulation model refers to a model configured to simulate a simulated object (e.g., the PV bracket) or a structural form thereof. In some embodiments, the simulation model may include a mathematical model and a physical model. The angle calculation unit may be configured to obtain at least two training samples and obtain the simulation model by training an initial model based on the at least two training samples. Each of the at least two training samples may include the set data, the fixed data, and the current detection data, and the power generation data in the target time period. In some embodiments, the power generation data of the PV panels corresponding to the set data, the fixed data, and the current detection data in the target time period may be determined based on a Finite Element Analysis (FEA) algorithm.

In some embodiments, training of the initial model may include one or more iterations. Each of the one or more iterations may include updating model parameters of the initial model based on the at least two training samples. In some embodiments, an optimization objective of initial model training may include adjusting the model parameters to make a value of a loss function smaller (e.g., minimizing the value of the loss function). The loss function may be configured to characterize a difference between the power generation data of the PV panels in the target time period predicted by the initial model and the set data, the fixed data, and the current detection data. For example, the loss function may include a focal loss function, a logarithmic loss function, a cross-entropy loss function, etc.

In some embodiments, training may be stopped if the initial model satisfies a termination condition in a particular iteration. For example, the termination condition may include any one or combination of: the value of the loss function obtained in a certain iteration being less than a threshold value, a certain count of iterations being performed, the loss function converging (e.g., a difference between the value of the loss function obtained in a previous iteration and the value of the loss function obtained in a current iteration is within a preset threshold), etc. In some embodiments, when the iteration does not satisfy the termination condition, the processing device may further update the initial model for use in a next iteration using other preset algorithms (e.g., a backpropagation algorithm). If the termination condition is satisfied in the current iteration, the processing device may complete training of the initial model.

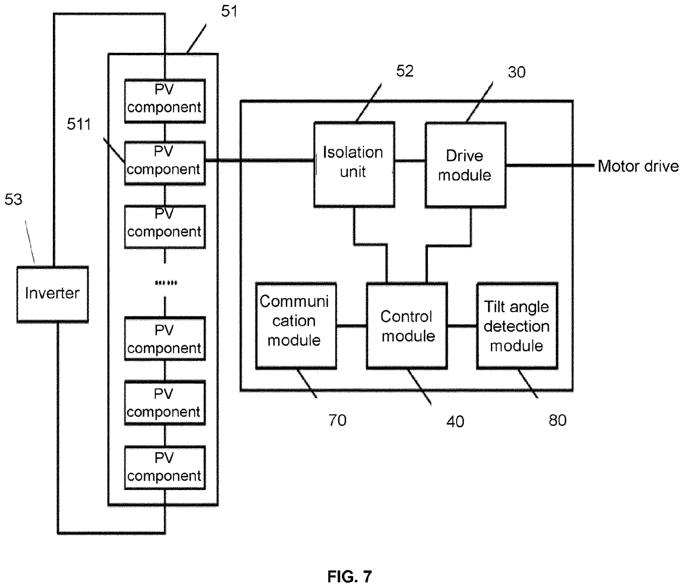

In some embodiments, the simulation model may include Convolutional Neural Networks (CNN), Residual Networks (ResNet), or the like. In some embodiments, the processing device may obtain the simulation model from one or more components or an external device of an application scenario of the PV bracket tracking system in FIG. 7. For example, the simulation model may be trained by the angle calculation unit and stored in a storage unit of the angle calculation unit. The angle calculation unit may access the storage unit and retrieve the simulation model.

In some embodiments, the angle calculation unit may determine, based on the electrical output parameters of the PV panels, the power generation data of the PV panels in the target time period by integrating the data, and thus determine the target angle of the PV panels in the target time period.

In some embodiments, since the electrical output parameters of the PV panels are subject to loss in a process of transmission to a grid-connected point due to various reasons, e.g., the process of transmission to an inverter via a DC cable is subject to loss due to heat generation from the DC cable, the electrical output parameters of the grid-connected point may be iteratively calculated to determine the power generation data. The grid-connected point refers to a point where output of all the PV panels is aggregated. More descriptions regarding the grid-connected point may be found in FIGs. 2-3, and descriptions of embodiments thereof.

In some embodiments, as illustrated in FIG. 7, a PV component 511 may be electrically connected with an inverter 53 (or referred to as a PV inverter). The inverter 53 may be configured to convert a DC voltage transmitted by a PV string 51 into an AC voltage to be connected to the power grid. In some embodiments, as illustrated in FIG. 4, the PV component 511 may be electrically connected with the inverter 53 through a DC cable (or referred to as the DC pooling cable in FIG. 2). In some embodiments, a transformer 54 may be disposed between the inverter 53 and the grid-connected point. Energy may be transmitted from the inverter 53 to the transformer 54 through an AC line (e.g., an AC cable), and then transmitted from the transformer 54 to the grid-connected point through the AC cable.

In some embodiments, the simulation model may include an inverter parameter model (e.g., the inverter model in FIGs. 2-3) and a transformer parameter model (e.g., the transformer model in FIGs. 2-3). The inverter parameter model may be configured to determine inverter AC output parameters based on the electrical output parameters of the PV panels. The transformer parameter model may be configured to determine grid-connected point electrical output parameters corresponding to different PV panel tilt angles based on the inverter AC electrical output parameters.

In some embodiments, the simulation model may include a DC collector line model (e.g., the DC collector line model in FIG. 3) and an AC collector line model (e.g., the AC collector line model in FIG. 3). The DC collector line model may be configured to determine inverter input parameters. The AC collector line model may be configured to determine transformer input parameters. More details regarding the DC collector line model and the AC collector line model may be found in FIG. 3 and descriptions of embodiments thereof.

FIG. 2 is a schematic diagram illustrating a processing process of a simulation model according to some embodiments of the present disclosure. As illustrated in FIG. 2, in some embodiments, a simulation model may determine a total solar irradiance received by a surface of a PV component at a current time, an incident angle of sunlight on the surface of the component, and scattering irradiance in combination with direct irradiance, the scattering irradiance, a ground reflection coefficient, a solar altitude angle, a solar azimuth angle, and a PV array mounting manner. In some embodiments, the simulation model may determine PV array output electrical parameters in combination with the total solar irradiance received by the surface of the PV component at the current time, the incident angle of the sunlight on the surface of the component, the scattering irradiance, a PV component model, a PV component series-parallel model, a component heat dissipation condition, an environmental temperature, a battery PN junction temperature at a previous moment, and an environmental wind speed. In some embodiments, the simulation model may include a DC collector line model. The DC collector cable model may be configured to determine, based on electrical parameters such as electrical power, voltage, and current output by a PV array, inverter input electrical parameters formed by energy transmitted to an inverter through the DC collector cable. The inverter input electrical parameters may include inverter DC side input power. The DC collector line model may be configured to determine loss in the transmission of the energy from the PV component to the inverter through a DC collector line (e.g., a DC cable). In some embodiments, the simulation model may include an inverter model. The inverter model may determine inverter AC side output parameters, i.e., inverter output electrical parameters, based on the inverter DC side input power. The inverter model may be configured to determine the loss after energy is converted through the inverter. When the inverter input parameters are determined, the inverter output parameters may be determined in combination with the loss resulting from the conversion. In some embodiments, the simulation model may include a transformer model and an AC collector line model. The transformer model may be configured to determine transformer output electrical parameters based on inverter AC side output, and then determine grid-connected point electrical parameters in combination with the AC collector line model. The grid-connected point electrical parameters may include grid-connected point AC output power and current. The AC collector line model may be configured to determine loss in the transmission of energy from the inverter to a transformer through an AC collector line (e.g., an AC cable). The transformer model may be configured to determine the loss generated after the energy is converted by the transformer. When transformer input parameters are determined, grid-connected point parameters, i.e. the power generation data of the PV panels, may be determined in combination with the loss generated by the conversion.

FIG. 3 is a schematic diagram illustrating a processing process of a simulation model according to some embodiments of the present disclosure. As illustrated in FIG. 3, in some embodiments, the simulation model may determine historical irradiation data of PV panels based on project locations of the PV panels. The project locations may include longitude and latitude of positions where the PV panels are located, and the historical irradiation data may include horizontal surface direct irradiation and horizontal surface diffuse irradiation. In some embodiments, the simulation model may determine component surface irradiation data in combination with the historical irradiation data, component selection, a component tilt angle, mounting parameters, and a reflection coefficient. The component surface irradiation data may include tilted surface direct irradiation, tilted surface diffuse irradiation, and tilted surface reflected irradiation. In some embodiments, the simulation model may determine component output parameters in combination with the component surface irradiation data, a component model, a series-parallel model, and an environmental temperature and wind speed. The component output parameters (or referred to as the PV panel electrical output parameters) may include a voltage parameter, a current parameter, and a power parameter. In some embodiments, the simulation model may determine inverter input parameters in combination with the component output parameters, a DC collector line model, and the environmental temperature and wind speed. The inverter input parameters may include the voltage parameter, the current parameter, and the power parameter. An input of the DC collector line model may include the component output parameters and the environmental temperature and wind speed, and an output of the DC collector line model may include the inverter input parameters. In some embodiments, the simulation model may determine inverter output parameters based on the inverter model and the inverter input parameters. The inverter output parameters may include the current parameter and the power parameter. In some embodiments, the simulation model may determine transformer input parameters in combination with the inverter output parameters, an AC collector line model, and the environmental temperature and wind speed. The transformer input parameters may include the current parameter and the power parameter. An input of the AC collector line model may include the inverter output parameters and the environmental temperature and wind speed, and an output of the AC collector line model may include the transformer input parameters. In some embodiments, the simulation model may determine grid-connected point parameters in combination with a transformer model and the transformer input parameters. The grid-connected point parameters may include the current parameter and the power parameter.

FIG. 4 is a schematic diagram illustrating a processing process of a simulation model according to some embodiments of the present disclosure. As illustrated in FIG. 4, in some embodiments, the simulation model may determine a total amount of radiation received on an array per hour in combination with hourly radiation data, a project location, array parameters, and array arrangement 3D, and then determine, in combination with the total amount of radiation received on the array per hour and an hourly temperature, that energy is transmitted from a PV component to an inverter through a DC cable, then from the inverter to a transformer, and finally from the transformer to a grid through an AC cable to obtain hourly power generation of PV panels. In some embodiments, the total amount of radiation received on the array per hour may reflect current irradiation information of an array. In some embodiments, the hourly radiation data may reflect historical irradiation information of the array. In some embodiments, input parameters for the energy to be transmitted from the PV component to the inverter through the DC cable may be determined by a DC collector line model. Input parameters for the energy to be transmitted from the inverter to the transformer may be determined by an inverter model and an AC collector line model. Input parameters for the energy to be transmitted from the transformer to a grid may be determined by a transformer model and the AC collector line model. In some embodiments, an angle calculation unit may perform an integration calculation of the hourly power generation of the PV panels to determine daily power generation of the PV panels. The daily power generation of the PV panels may be iterated to determine a daily target angle. Details regarding the above process are not repeated.

In some embodiments, a preset algorithm may further include a second preset algorithm. The angle calculation unit (e.g., the angle calculation unit 21 in FIG. 1) may be configured to determine, using the second preset algorithm, an inverse shadow occlusion angle based on a solar altitude angle, a solar azimuth angle, and size and layout information of PV panels. A target angle for north-south tracking may be determined based on an inverse shadow occlusion angle.

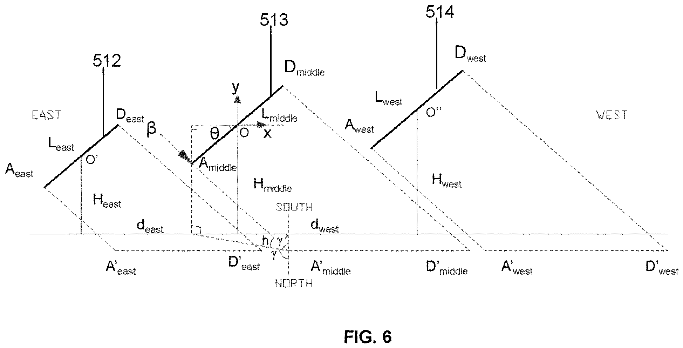

A size of each of the PV panels refers to a distance between endpoints of the PV panel in an east-west direction. For example, endpoints of a first PV panel 512 in the east-west direction in FIG. 6 may be $A_{east}$ and $D_{east}$, and then a length of the first PV panel 512 may be a distance $L_{east}$ from $A_{east}$ to $D_{east}$. Endpoints of a second PV panel 513 in the east-west direction may be $A_{middle}$ and $D_{middle}$, and thus a length of the second PV panel 513 may be a distance $L_{middle}$ from $A_{middle}$ to $D_{middle}$. Similarly, a length of a third PV panel 514 may be a distance $L_{west}$ from $A_{west}$ to $D_{west}$. The layout information of the PV panels refers to distribution information of the PV panels, such as a count of rows and columns of the PV panels, whether a plurality of PV panels being arranged side by side or in a single row in the east-west direction in case of the plurality of PV panels, and a spacing of adjacent PV panels when the plurality of PV panels are arranged side by side in the east-west direction. The spacing of the PV panels refers to a distance between midpoints of lengths of the adjacent PV panels. For example, in the embodiment in FIG. 6, a spacing between the first PV panel 512 and the second PV panel 513 may be a distance $d_{east}$ from o to o', and a spacing between the second PV panel 513 and the third PV panel 514 may be a distance $d_{west}$ from o to o".

In some embodiments, when the PV bracket is arranged a single row, the angle calculation unit (e.g., the angle calculation unit 21 in FIG. 1) may determine, using the second preset algorithm, a target angle based on the solar altitude angle and the solar azimuth angle. FIG. 5 is a schematic diagram illustrating a position of a PV bracket relative to the sun according to some embodiments of the present disclosure. As illustrated in FIG. 5, a solar altitude angle may be represented by ∠SOH, and a solar azimuth angle may be represented by ∠HOP. A target angle ∠HSQ of PV panels may be obtained by the following formula:

$$\tan \angle SOH = \frac{SH}{OH}, \tag{1}$$

$$\cos \angle HOP = \frac{QH}{OH}, \tag{2}$$

$$\tan \angle HSQ = \frac{QH}{SH} = \frac{\cos \angle HOP}{\tan \angle SOH}, \tag{3}$$

$$\angle HSQ = \operatorname{atan}\left(\frac{\cos \angle HOP}{\tan \angle SOH}\right). \tag{4}$$

In some embodiments, if the PV bracket includes at least two rows of PV panels arranged side by side, whether the PV panels are occluded by other PV panels may be considered when the target angle of the PV panels is determined. Merely by way of example, the PV bracket may include two rows of PV panels arranged side by side in the east-west direction, and the sun is located on one side of the PV bracket in the east-west direction. When the solar altitude angle is 0 degree (i.e., the sun is parallel to a ground plane), if the PV panels on a side close to the sun are tilted, the other row of PV panels may be occluded, and a shadow may form on surfaces of the other row of PV panels, resulting in the solar radiation not being able to be fully irradiated to the other row of PV panels, which in turn affects the power generation efficiency of the PV panels. Therefore, in some embodiments, in order to avoid occlusion (i.e., forming the shadow on the surfaces of the PV panels) of the PV panels, an inverse shadow occlusion angle may be determined in combination with sizes and layout information of the PV panels when the target angle is determined. The inverse shadow occlusion angle refers to a critical angle at which adjacent PV panels of a plurality rows of PV panels do not occlude each other from solar radiation.

In some embodiments, the PV bracket may include at least two rows of PV panels arranged side by side in the east-west direction. An angle calculation unit may determine the inverse shadow occlusion angle based on the following preset formula:

$$\theta = \arcsin\left(\frac{-k_1 b_1 - \sqrt{k_1^2 - b_1^2 + 1}}{k_1^2 + 1}\right), \tag{5}$$

where $\theta$ denotes the inverse shadow occlusion angle, $k_1$ denotes a ratio of a sine value of a solar azimuth angle to a tangent value of a solar altitude angle, and $b_1$ denotes a ratio of a spacing between two adjacent rows of PV panels arranged side by side in the east-west direction to a length of a target PV panel in the east-west direction. The target PV panel refers to a PV panel that needs angle adjustment. Descriptions regarding the specific calculation process of formula (5) may be found in the descriptions of other embodiments of the present disclosure.

In some embodiments, after the inverse shadow occlusion angle is determined, the angle calculation unit may determine an actual target angle by combining the inverse shadow occlusion angle with the target angle calculated by the methods in other embodiments of the present disclosure. For example, the calculated target angle may be compared with the inverse shadow occlusion angle. When a difference between the calculated target angle and the inverse shadow occlusion angle exceeds a difference threshold, the angle calculation unit may use the inverse shadow occlusion angle as the actual target angle. When the difference between the calculated target angle and the inverse shadow occlusion angle does not exceed the difference threshold, the angle calculation unit may use the calculated target angle as the actual target angle.

In some embodiments, as illustrated in FIG. 6, the PV bracket may include the first PV panel 512, the second PV panel 513, and the third PV panel 514 arranged side by side. The first PV panel 512, the second PV panel 513, and the third PV panel 514 may be arranged side by side in the east-west direction. The angle calculation unit may determine a first inverse shadow occlusion angle based on a size of the first PV panel 512, a size of the second PV panel 513, and a spacing between the first PV panel 512 and the second PV panel 513; determine a second inverse shadow occlusion angle based on a size of the second PV panel 513, a size of the third PV panel 514, and a spacing between the second PV panel 513 and the third PV panel 514; and determine a target angle of the second PV panel 513 based on the first inverse shadow occlusion angle and the second inverse shadow occlusion angle. In this embodiment, the angle calculation unit may determine inverse shadow occlusion angles of the adjacent PV panels through the sizes of the three PV panels arranged side by side and the spacing between the adjacent PV panels, so that the three PV panels may not occlude each other.

In some embodiments, the angle calculation unit may determine a current time based on the solar altitude angle and the solar azimuth angle. If the current time is in the morning, the angle calculation unit may determine a morning inverse shadow occlusion angle based on a first shadow angle formula. If the current time is in the afternoon, the angle calculation unit may determine an afternoon inverse shadow occlusion angle based on a second shadow angle formula. In some embodiments, determination of the target angle is affected by the fact that the sun is at different altitudes and azimuths at different moments. For example, as illustrated in FIG. 6, when the current time is morning, the sun is located in the east, whether an east panel (i.e., the first PV panel 512) occludes a middle panel (i.e., the second PV panel 513), and whether the middle panel occludes a west panel (i.e., the third PV panel 514) may be considered. As another example, when the current time is afternoon, the sun is located in the west, whether the west panel occludes the middle panel, and whether the middle panel occludes the east panel may be considered. In this embodiment, the angle calculation unit may determine the current time through the solar altitude angle and the solar azimuth angle, and then determine a more appropriate shadow angle formula based on the current time, and ultimately determine the inverse shadow occlusion angle.

FIG. 6 is a simple schematic diagram illustrating three PV panels arranged side by side in an east-west direction according to some embodiments of the present disclosure. As illustrated in FIG. 6, the first PV panel 512, the second PV panel 513, and the third PV panel 514 may be three PV panels arranged side by side in the east-west direction. o denotes an axis of a rotation axis of the second PV panel 513 (o is a midpoint from $A_{middle}$ to $D_{middle}$), o' denotes an axis of a rotation axis of the first PV panel 512 (o' is a midpoint from $A_{east}$ to $D_{east}$), and o" denotes an axis of a rotation axis of the third PV panel 514 (o" is a midpoint from $A_{west}$ to $D_{west}$). An o-xyz coordinate system may be established with o as a center, and coordinates of the origin o may be (0, 0, 0). An ox positive direction may point to a due west direction, an oy positive direction may face upward perpendicular to a ground plane, and an oz positive direction may point to a due north direction. A tilt angle of the second PV panel 513 may be denoted as $\theta$, a direction of an arrow $\beta$ may be an incident direction of sunlight, the solar azimuth angle may be denoted as $\gamma$, and the solar altitude angle may be denoted as h. A size of the first PV panel 512 may be a length $L_{east}$ from $A_{east}$ to $D_{east}$. A size of the second PV panel 513 may be a length $L_{middle}$ from $A_{middle}$ to $D_{middle}$. A size of the third PV panel 514 may be a length $L_{west}$ from $A_{west}$ to $D_{west}$. A height of the PV panel refers to a distance from a midpoint of a lengthwise direction of the PV panel to the ground plane. For example, a height of the first PV panel 512 may be denoted as $H_{east}$, a height of the second PV panel 513 may be denoted as $H_{middle}$, and a height of the third PV panel 514 may be denoted as $H_{west}$. A spacing between the first PV panel 512 and the second PV panel 513 may be denoted as $d_{east}$, and a spacing between the second PV panel 513 and the third PV panel 514 may be denoted as $d_{west}$. Taking the current time in the morning as an example, projections of $A_{east}$ and $D_{east}$ on the ground plane in the incident direction of sunlight may be $A'_{east}$ and $D'_{east}$, respectively, projections of $A_{middle}$ and $D_{middle}$ on the ground plane in the incident direction of sunlight may be $A'_{middle}$ and $D'_{middle}$, respectively, and projections of $A_{west}$ and $D_{west}$ on the ground plane in the incident direction of sunlight may be $A'_{west}$ and $D'_{west}$, respectively. $\gamma'=\pi-\gamma$, the angle calculation unit may determine the inverse shadow occlusion angle of the first PV panel 512 and the second PV panel 513 when the time is in the morning by the following formula. In the o-xyz coordinate system, coordinates of $A_{middle}$ and $D_{middle}$ may be represented by:

$$A_{middle}(-(L_{middle}/2)\cdot\cos\theta, -(L_{middle}/2)\cdot\sin s\theta, 0), \qquad (6)$$

$$D_{middle}((L_{middle}/2)\cdot\cos\theta, (L_{middle}/2)\cdot\sin\theta, 0). \qquad (7)$$

A coordinate system $A'_{middle}$-xyz may be established with $A'_{middle}$ as the origin. D-H representation may be illustrated as:

| i | $a_i$ | $\alpha_i$ | $d_i$ | $\theta_i$ |
|---|---|---|---|---|
| 1 | $(-(L_{middle}/2)\cdot\sin\theta + H_{middle})\cdot\coth$ | 0 | $ZD'_{middle}$ | $\theta$ |
| 2 | d | 0 | 0 | $\theta$ |

$$T^O_{Amiddle} = \begin{bmatrix} A_{middlex}X & Y_{middlex}X & Z_{middlex}X & P_x \\ A_{middley}Y & Y_{middlex}Y & Z_{middlex}Y & P_y \\ A_{middley}Z & Y_{middlex}Z & Z_{middlex}Z & P_z \\ 0 & 0 & 0 & 1 \end{bmatrix}. \qquad (8)$$

$A'_{middle}(x_{A'middle}, y_{A'middle}, z_{A'middle})$ may be calculated by coordinate transformation, wherein

$$x_{A'middle} = -(L_{middle}/2)\cdot\cos\theta + [(-(L_{middle}/2)\cdot\sin\theta + H_{middle})\cdot\coth\cdot\cos\gamma'], \qquad (9)$$

$$y_{A'middle} = -H_{middle}, \qquad (10)$$

$$z_{A'middle} = (-(L_{middle}/2)\cdot\sin\theta + H_{middle})\cdot\coth\cdot\cos\gamma'. \qquad (11)$$

Similarly, $D'_{middle}(x_{D'middle}, y_{D'middle}, z_{D'middle})$ may be calculated according to:

$$x_{D'middle} = (L_{middle}/2)\cdot\cos\theta + [((L_{middle}/2)\cdot\sin\theta + H_{middle})\cdot\coth\cdot\cos\gamma'], \qquad (12)$$

$$y_{D'middle} = -H_{middle}, \qquad (13)$$

$$z_{D'middle} = ((L_{middle}/2)\cdot\sin\theta + H_{middle})\cdot\coth\cdot\cos\gamma'. \qquad (14)$$

Similarly, a coordinate system o'-x'y'z' may be established with o' as the origin. Coordinates of the projections $A'_{east}$ and $D'_{east}$ of $A_{east}$ and $D_{east}$ on the ground plane may be obtained using the above formula. The coordinates in o'-x'y'z' may be translated to the coordinates in o-xyz to obtain the coordinates of $A'_{east}$ and $D'_{east}$ in the coordinate system o-xyz.

$$T^O_{O'} = \begin{bmatrix} A'X & Y'X & Z'X & d_{east} \\ A'Y & Y'Y & Z'Y & 0 \\ A'Z & Y'Z & Z'Z & 0 \\ 0 & 0 & 0 & 1 \end{bmatrix}, \qquad (15)$$

$A'_{east}(x_{A'east}, y_{A'east}, z_{A'east})$ may be obtained through coordinate transformation, wherein

$$x_{A'east} = -(L_{east}/2)\cdot\cos\theta + [(-(L_{east}/2)\cdot\sin\theta + H_{east})\cdot\coth\cdot\cos\gamma'] - d_{east}, \qquad (16)$$

$$y_{A'east} = -H_{east}, \tag{17}$$

$$z_{A'east} = (-(L_{east}/2) \cdot \sin\theta + H_{east}) \cdot \coth \cdot \cos\gamma'. \tag{18}$$

Similarly, $D'_{east}(x_{D'east}, y_{D'east}, z_{D'east})$ may be calculated, wherein

$$x_{D'east} = (L_{east}/2) \cdot \cos\theta + [((L_{east}/2) \cdot \sin\theta + H_{east}) \cdot \coth \cdot \cos\gamma'] - d_{east}, \tag{19}$$

$$y_{D'east} = -H_{east}, \tag{20}$$

$$z_{D'east} = ((L_{east}/2) \cdot \sin\theta + H_{east}) \cdot \coth \cdot \cos\gamma'. \tag{21}$$

When the endpoint $D_{east}$ of the first PV panel 512 and the endpoint $A_{middle}$ of the second PV panel 513 occlude, i.e., $x_{D'east} = x_{A'middle}$:

$$\cos\theta = -\sin\theta \cdot \coth \cdot \cos\gamma' + (d_{east} - (H_{east} - H_{east}) \cdot \coth \cdot \cos\gamma')/(L_{east}/2 + L_{east}/2). \tag{22}$$

The calculation leads to formula (5):

$$\theta = \arcsin\left(\frac{-k_1 b_1 - \sqrt{k_1^2 - b_1^2 + 1}}{k_1^2 + 1}\right). \tag{5}$$

Similarly, the angle calculation unit may calculate $\theta$ at which shadow occlusion occurs between the endpoint $D_{middle}$ of the second PV panel 513 and the endpoint $A_{west}$ of the third PV panel 514. The $\theta$ at which shadow occlusion occurs between the endpoint $D_{east}$ of the first PV panel 512 and the endpoint $A_{middle}$ of the second PV panel 513 and the $\theta$ at which shadow occlusion occurs between the endpoint $D_{middle}$ of the second PV panel 513 and the endpoint $A_{west}$ of the third PV panel 514 may be compared, and the $\theta$ at which no shadow occlusion occurs on either of the first PV panel 512, the second PV panel 513, and the third PV panel 514 may be selected as the inverse shadow occlusion angle in the morning.

In some embodiments, the angle calculation unit may calculate the $\theta$ at which shadow occlusion occurs between the endpoint $A_{west}$ of the third PV panel 514 and the endpoint $D_{middle}$ of the second PV panel 513, and the $\theta$ at which shadow occlusion occurs between the endpoint $A_{middle}$ of the second PV panel 513 and the endpoint $D_{east}$ of the first PV panel 512 in the afternoon, and select the $\theta$ at which no shadow occlusion occurs on either of the third PV panel 514, the second PV panel 513, and the first PV panel 512 as the inverse shadow occlusion angle in the afternoon.

In some embodiments, the angle calculation unit may determine to calculate the inverse shadow occlusion angle using the first shadow angle formula or the second shadow angle formula directly based on the solar altitude angle and the solar azimuth angle. For example, the angle calculation unit may determine a relative position of the sun to the PV panels at the current time based directly on the solar altitude angle and the solar azimuth angle. Taking FIG. 6 as an example, when the sun is located on the east side of the PV panels, the inverse shadow occlusion angle may be determined using the first shadow angle formula. On the contrary, when the sun is located on the west side of the PV panels, the inverse shadow occlusion angle may be determined using the second shadow angle formula. For example, $k_1$ in formula (5) denotes the ratio of the sine value of the solar azimuth angle to the tangent value of the solar altitude angle, so when the time is morning, the ratio of the sine value of the solar azimuth angle to the tangent value of the solar altitude angle corresponding to the morning may be substituted into formula (5) to obtain the first shadow angle formula and the inverse shadow angle corresponding to the morning. When the time is afternoon, the ratio of the sine value of the solar azimuth angle to the tangent value of the solar altitude angle corresponding to the afternoon may be substituted into formula (5) to obtain the second shadow angle formula and the inverse shadow angle corresponding to the afternoon.

In some embodiments, the angle calculation unit (e.g., the angle calculation unit 21 in FIG. 1) may be configured to determine the target angle based on one or more of the geographic location, the historical meteorological information, the historical irradiation information, the PV array device information, the PV array mounting arrangement information, the current meteorological information, the current irradiation information, the ground material information, the current time, the current cloud cover distribution information, and the environmental information by: determining the target angle based on the meteorological information by switching between a first preset algorithm and a second preset algorithm. In some embodiments, by switching the preset algorithm for determining the target angle based on the meteorological information, the determined target angle can be more in line with the current weather conditions, thereby further increasing the power generation of the PV panels.

In some embodiments, the meteorological information may include a weather condition, a sunlight scattering ratio, and a direct sunlight ratio. The weather condition may include a cloudy day and a sunny day. The sunlight scattering ratio refers to a ratio of scattered sunlight irradiance from sunlight to total solar irradiance. The direct sunlight ratio refers to a ratio of direct sunlight irradiance from sunlight to the total solar irradiance. If the weather condition is the cloudy day and/or the sunlight scattering ratio is greater than a scattering ratio threshold, the angle calculation unit may switch to use the first preset algorithm. If the weather condition is the sunny day and/or the direct sunlight proportion is greater than a direct proportion threshold, the angle calculation unit may switch to use the second preset algorithm. The sunny day refers to a sky condition in which there are no clouds or very few clouds in the sky, such as less than 1/10 of total clouds. The cloudy data refers to a sky condition in which there are more clouds in the sky, such as greater than 8/10 of the total clouds. In this embodiment, when the weather condition is the cloudy day, there are more clouds in the air, and the sunlight passing through the clouds is prone to form scattered light, which results in a large proportion of the scattered light in the sunlight. In this case, the angle calculation unit may calculate the target angle using the first preset algorithm. When the weather condition is the sunny day, there are fewer clouds in the air, and the sunlight is more likely to form direct light, which results in a small proportion of scattered light in the sunlight and a large proportion of direct light in the sunlight. In this case, the angle calculation unit may calculate the target angle using the second preset algorithm.

In some embodiments, the meteorological information may be obtained directly from a meteorological station. In some embodiments, the angle calculation unit (e.g., the angle calculation unit 21 in FIG. 1) may determine the meteorological information based on the current irradiation information. For example, the current irradiation information may include tilted surface direct irradiation, tilted surface diffuse irradiation, and tilted surface reflected irradiation, and the angle computation unit may determine, based on the tilted surface direct irradiation, the ratio of the direct sunlight irradiance to the total solar irradiance, i.e., a direct sunlight ratio threshold. In some embodiments, the angle calculation unit may determine the meteorological information in combination with the current irradiation information and the environmental information. For example, when the ratio of the direct sunlight irradiance to the total solar irradiance is greater than the direct sunlight ratio threshold and the environmental wind speed is less than a wind speed threshold, the angle calculation unit may determine that the weather condition is the sunny day. As another example, when the ratio of the scattered sunlight irradiance to the total solar irradiance is greater than the scattering ratio threshold and the environmental wind speed is greater than the wind speed threshold, the angle calculation unit may determine that the weather condition is the cloudy day. In some embodiments, the angle calculation unit may obtain historical meteorological information corresponding to the current time from a database and use the historical weather information corresponding to the current time as the meteorological information of the current time.

In some embodiments, the power supply module 50 may include the PV string 51 and the isolation unit 52, as illustrated in FIG. 1 and FIG. 7. The PV string 51 may include a plurality of PV components 511 (or components). An input end of the isolation unit 52 may be electrically connected with at least one of the plurality of PV components 511, and an output end of the isolation unit 52 may be electrically connected with the drive module 30 and the control module 40, respectively. The plurality of PV components 511 refer to devices capable of converting solar radiation energy into electrical energy. For example, the plurality of PV components 511 may include a plurality of PV panels. The plurality of PV panels may be connected in a series, parallel, or hybrid manner to form a circuit unit having a certain DC output, i.e., the PV string 51. The isolation unit 52 may be configured to electrically isolate the drive module 30 and the control module 40 from the plurality of PV components 511 to enable the control module 40 and the drive module 30 to operate safely. In some embodiments, an input voltage and an output voltage of the isolation unit 52 may be a DC voltage, and thus the isolation unit 52 is referred to as an isolation DC/DC unit.

In some embodiments, the PV string 51 may output a DC voltage. In some embodiments, an overall open voltage of the PV string 51 may be less than 2000 V. The open voltage refers to a voltage across a circuit when the circuit is in an open state. In some embodiments, the open voltage of the PV string 51 may be a voltage between a head end and a tail end of the PV string 51. The voltage between the head end and the tail end of the PV string 51 refers to a voltage between the first PV module 511 and the last PV module 511 connected in series in the PV string 51. In some embodiments, the open voltage of the PV string 51 may be less than 1800 V. In some embodiments, the open voltage of the PV string 51 may be 1500 V. In some embodiments, the open voltage of the PV string 51 may be 1000 V.

In some embodiments, the overall open voltage of the PV string 51 may be related to a count of the plurality of PV components 511 included in the PV string 51 and the open voltage of each of the plurality of PV components 511. In some embodiments, the open voltage of a single PV component 511 may be within a range from 10 V to 120 V. In some embodiments, the open voltage of the single PV component 511 may be within a range from 20 V to 90 V. In some embodiments, the open voltage of the single PV component 511 may be within a range from 30 V to 60 V.

In some embodiments, an output voltage of the isolation unit 52 may be within a range from 5 V to 60 V. In some embodiments, the output voltage of the isolation unit 52 may be within a range from 10 V to 50 V. In some embodiments, the output voltage of the isolation unit 52 may be within a range from 12 V to 48 V. In some embodiments, the output voltage of the isolation unit 52 may be 24V.

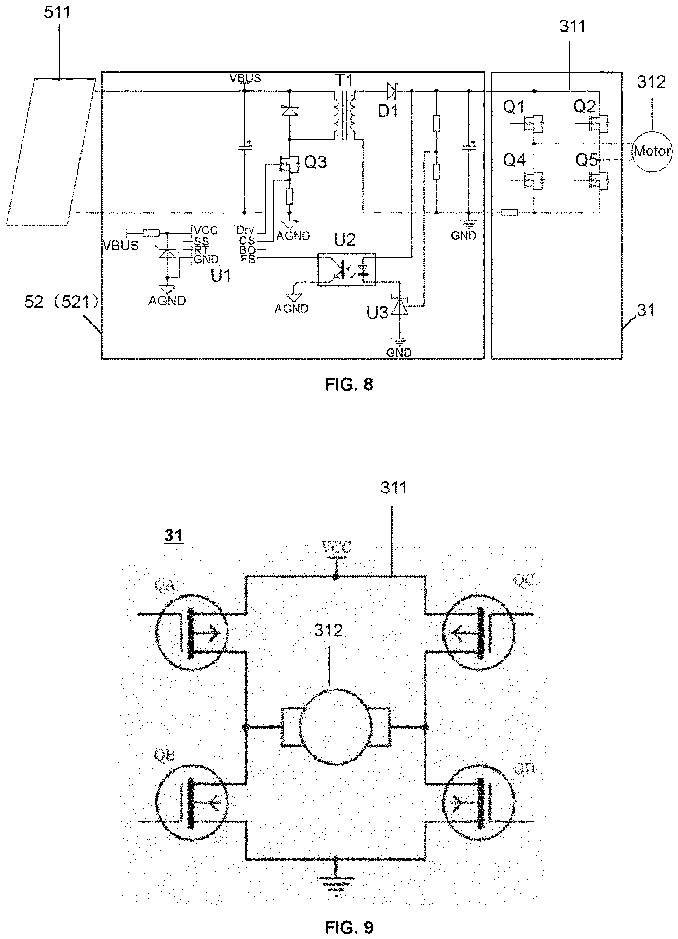

In some embodiments, a withstand voltage value of the isolation unit 52 may be greater than a withstand voltage threshold. The withstand voltage value refers to a minimum value of an insulation voltage that can be withstood between an input port of a circuit (e.g., a switching power supply circuit 521 in FIG. 8) of the isolation unit 52 and a secondary circuit. In some embodiments, the withstand voltage value of the isolation unit 52 may be greater than 4000 VDC (DC voltage). In some embodiments, the withstand voltage value of the isolation unit 52 may be greater than 4500 VDC. In some embodiments, the withstand voltage value of the isolation unit 52 may be 5000 VDC.

In some embodiments, the withstand voltage value of the isolation unit 52 may be related to a structure of a transformer (e.g., a high-frequency transformer T1 in FIG. 8) in the circuit of the isolation unit 52. In some embodiments, the isolation unit 52 may further include the high-frequency transformer T1. A winding wire of the high-frequency transformer T1 may include a primary side and a secondary side. After a pulse voltage passes through the primary side of the winding wire of the high-frequency transformer T1 to reach the secondary side, the pulse voltage may be converted into an AC voltage by the high-frequency transformer T1. In some embodiments, the winding wire of the high-frequency transformer T1 may include a double insulated conductor. The double insulated conductor may increase the withstand voltage value of the isolation unit 52, thereby increasing the safety of the switching power supply circuit 521. More details regarding the high-frequency transformer T1 may be found in FIG. 8 and descriptions of embodiments thereof, which are not repeated here.

In some embodiments, the withstand voltage value of the isolation unit 52 may be related to an electrical clearance and an electrical creepage distance of the isolation unit 52. The electrical creepage distance refers to a shortest path between two conductive parts measured in an insulation surface. The electrical clearance refers to a shortest spatial distance measured between the two conductive parts. The larger the electrical clearance and the electrical creepage distance of the isolation unit 52, the higher the withstand voltage value of the isolation unit 52. On the contrary, the smaller the electrical clearance and the electrical creepage distance of the isolation unit 52, the lower the withstand voltage value of the isolation unit 52.

In some embodiments, an electrical creepage distance of the PV bracket tracking system 10 may be greater than 6 mm. In some embodiments, the electrical creepage distance of the PV bracket tracking system 10 may be greater than 8 mm. In some embodiments, the electrical creepage distance of the PV bracket tracking system 10 may be greater than 11 mm.

In some embodiments, an electrical clearance of the PV bracket tracking system 10 may be greater than 6 mm. In some embodiments, the electrical clearance of the PV bracket tracking system 10 may be greater than 8 mm. In some embodiments, the electrical clearance of the PV bracket tracking system 10 may be greater than 10 mm.

In some embodiments, the electrical clearance and the electrical creepage distance of the isolation unit 52 may be related to a structure of an isolation optocoupler (e.g., an isolation optocoupler U2 in FIG. 8). More details regarding the isolation optocoupler U2 may be found in FIG. 8 and descriptions of embodiments thereof, which are not repeated here.

In some embodiments, as illustrated in FIGs. 1, 7, and 8, the drive module 30 may include a motor drive circuit 31. An input end of the motor drive circuit 31 may be electrically connected with an output end of the isolation unit 52. In some embodiments, an output end of the motor drive circuit 31 may be in transmission connection with a rotation axis (e.g., the rotation axis in FIG. 5) of the PV bracket. The isolation unit 52 may obtain the electrical energy from the plurality of PV components 511 and transmit the electrical energy to the motor drive circuit 31 to drive the rotation axis of the PV bracket to rotate.

In some embodiments, the motor drive circuit 31 may include a switching circuit 311 and a motor 312. An input end of the switching circuit 311 may be electrically connected with the output end of the isolation unit 52, and an output end of the switching circuit 311 may be electrically connected with an input end of the motor 312. An output end of the motor 312 may be electrically connected with the rotation axis of the PV bracket.

In some embodiments, a power density of the motor drive circuitry 31 may be no less than a power density threshold. The power density refers to output power of a circuit per unit package volume. The package volume refers to a volume of an electrical component packaged as a whole. For example, an overall volume formed by setting the circuit on a printed circuit board (PCB) may be the package volume. Merely by way of example, the package volume of setting the motor drive circuit 31 in FIG. 8 on the PCB may be 10*17*2.6 cm$^3$. In some embodiments, the power density of the motor drive circuit 31 may be no less than 0.3 W/cm$^3$. In some embodiments, the power density of the motor drive circuit 31 may be no less than 0.4 W/cm$^3$. In some embodiments, the power density of the motor drive circuit 31 may be no less than 0.5 W/cm$^3$. In some embodiments, maximum output power of the motor drive circuit 31 may be greater than 120 W. In some embodiments, the maximum output power of the motor drive circuit 31 may be greater than 140 W. In some embodiments, the maximum output power of the motor drive circuit 31 may be 150 W. In some embodiments, because the greater the power density of the motor drive circuit 31, the more power the motor drive circuit 31 of the same package volume outputs, the power supply power can be increased by selecting the motor drive circuit 31 with greater power density, thereby meeting the objective of adjusting the angles of the PV panels at high frequency.

In some embodiments, the power density may be positively correlated with a switching frequency of the motor drive circuit 31. The switching frequency refers to a count of times the motor driver circuit 31 outputs a pulse width modulation signal per unit of time. For each output of the pulse width modulation signal, a voltage may be output to the motor. In some embodiments, the switching frequency of the motor drive circuit 31 may be greater than 15 kHz. In some embodiments, the switching frequency of the motor drive circuit 31 may be greater than 30 kHz. In some embodiments, the switching frequency of the motor drive circuit 31 may be greater than 80 kHz. In some embodiments, the switching frequency of the motor drive circuit 31 may be greater than 90 kHz. In some embodiments, the switching frequency of the motor drive circuit 31 may be greater than 100 kHz. In some embodiments, by selecting the motor drive circuit 31 with a higher switching frequency, harmonics output from the motor drive circuit 31 to the motor 312 can be reduced, resulting in lower heat generation from the motor 312 and lower motor loss.

In order to improve the power density and the switching frequency of the motor drive circuit 31, a structure of the motor drive circuit 31 may be adjusted. In some embodiments, as illustrated in FIG. 8, the motor drive circuit may include a two-phase H-bridge circuit (i.e., a switching circuit). The two-phase H-bridge circuit may include four N-Metal-Oxide-Semiconductor (NMOS) tubes. The four NMOS tube may be configured to receive a pulse width modulation (PWM) drive signal to enable the motor drive circuit 31 to be conducted to output a voltage. The PWM drive signal refers to a PWM signal configured to control a switching element (e.g., an NMOS tube Q1, an NMOS tube Q2, an NMOS tube Q4, and an NMOS tube Q5) in a circuit to turn on or off, thereby connecting or disconnecting the circuit. In the embodiment in FIG. 8, the NMOS tube Q1 and the NMOS tube Q2 may form an upper bridge arm of the two-phase H-bridge, and the NMOS tube Q4 and the NMOS tube Q5 may form a lower bridge arm of the two-phase H-bridge. Input ends of the NMOS tubes Q1, Q2, Q4, and Q5 may be connected with the output end of the isolation unit. Output ends of the NMOS tubes Q1, Q2, Q4, and Q5 may be electrically connected with the input end of the motor 312.

In some embodiments, the control module 40 may control different NMOS tubes of the switching circuit 311 (i.e., the circuit including the NMOS tubes Q1, Q2, Q4, and Q5) to turn on and off to realize forward and reverse rotation operation of the motor 312. Reverse rotation of the motor 312 means that an output shaft of the motor 312 rotates counterclockwise. Forward rotation of the motor 312 means that the output shaft of the motor 312 rotates clockwise. It should be noted that the forward rotation and the reverse rotation of the motor 312 in the present disclosure are only used as examples and are not intended to limit the forward rotation and the reverse rotation of the motor 312. For example, the forward rotation of the motor 312 also means that the output shaft of the motor 312 rotates counterclockwise, and the reverse rotation of the motor 312 also means that the output shaft of the motor 312 rotates clockwise. The forward rotation and the reverse rotation of the motor 312 are illustrated below with reference to FIG. 8. When the NMOS tubes Q1 and Q5 are turned on, and the NMOS tubes Q2 and Q4 are turned off, the motor 312 may be in a forward rotation mode, and current may pass through the NMOS tube Q1, the motor, and the NMOS tube Q5 in turn. When the NMOS tubes Q1 and Q5 are turned off and the NMOS tubes Q2 and Q4 are turned on, the motor 312 may be in a reverse rotation mode, and the current may pass through the NMOS tube Q2, the motor, and the NMOS tube Q5 in turn.

In some embodiments, the control module 40 may control a switching pulse duty cycle (or referred to as a duty cycle) of the motor drive circuit 31 to achieve speed regulation of the motor 312. Speed regulation of the motor 312 refers to regulating speed of the output shaft of the motor 312. In some embodiments, the switching pulse duty cycle of the motor drive circuit 31 may be positively correlated with the switching frequency of the motor drive circuit 31. The duty cycle of the motor drive circuit 31 may be equal to a duty cycle of the PMW drive signal of the two-phase H-bridge circuit. The duty cycle of the motor drive circuit 31 refers to a percentage of time that the NMOS tubes of the motor drive circuit 31 are in an on state to an entire circuit operating cycle. For example, if the NMOS tubes of the motor drive circuit 31 are in the on state under the control of the PWM drive signal for half of one operating cycle, the duty cycle of the PWM drive signal may be 50%. In some embodiments, since the motor drive circuit 31 provided in the present disclosure has a relatively high switching pulse duty cycle, the harmonics of the motor 312, the heat of the motor 312, and the loss of the motor 312 can be reduced while enabling the speed regulation process of the motor 312 to be smoother.

In some embodiments, the output voltage of the motor drive circuit 31 may be equal to a product of the input voltage of the motor drive circuit 31 and the duty cycle of the PWM drive signal of the motor drive circuit 31. Other things being equal, the greater the output voltage of the motor drive circuit 31, the greater the speed of the motor 312. The smaller the output voltage of the motor drive circuit 31, the smaller the speed of the motor 312. The input voltage of the motor drive circuit 31 may be equal to the output voltage of the isolation unit 52. In some embodiments, the duty cycle of the PWM drive signal of the motor drive circuit 31 may be within a range of 0-100%. In some embodiments, the duty cycle of the PWM drive signal of the motor drive circuit 31 may be equal to the duty cycle of the PMW drive signal of the NMOS tubes in the circuit, and thus the control module 40 may regulate the speed of the motor 312 by regulating the duty cycle of the PMW drive signal of the NMOS tubes. Merely by way of example, the speed of the motor 312 may be regulated when the motor 312 is in the forward rotation mode. When the speed of the motor 312 is regulated, the control module 40 may turn off the NMOS tubes Q2 and Q4, then turn on the NMOS tubes Q1 and Q5, and regulate the duty cycle of the PWM drive signals of NMOS tubes Q1 and Q5. For example, if the speed of the motor 312 needs to be increased, the control module 40 may increase the duty cycle of the PWM drive signals of the NMOS tubes Q1 and Q5. If the speed of the motor 312 needs to be reduced, the control module 40 may decrease the duty cycle of the PWM drive signals of the NMOS tubes Q1 and Q5.

In some embodiments, a maximum voltage transmitted by the motor drive circuit 31 to the motor 312 may be related to the output voltage of the isolation unit 52. For example, when the output of the isolation unit 52 is a stable 24V DC voltage, the maximum voltage transmitted by the motor drive circuit 31 to the motor 312 may be 24 V (i.e., when the duty cycle of the PMW signal is 100%), and a minimum voltage may be 0 (i.e., when the duty cycle of the PMW signal is 0). In some embodiments, the maximum value of the output voltage of the isolation unit 52 may be 36 V to ensure that the voltage output from the motor drive circuit 31 is always within a safe voltage range (i.e., 0-36V) of the human body.

In some embodiments, a rated drive current of the motor 312 may be within a range from 1 A to 10 A. The rated current refers to a current at which the motor 312 operates at a rated power and a rated voltage. In some embodiments, the rated drive current of the motor 312 may be within a range from 2 A to 6 A. In some embodiments, the rated drive current of the motor 312 may be 5 A.

In some embodiments, a maximum drive current of the motor 312 may be within a range from 1 A to 15 A. The maximum drive current refers to a maximum output current that the motor 312 can provide to the outside at the rated output voltage. In some embodiments, the maximum drive current of the motor 312 may be within a range from 5 A to 10 A. In some embodiments, the maximum drive current of the motor 312 may be 8 A.

In other embodiments, as illustrated in FIG. 9, the motor drive circuit 31 may include an H-bridge circuit including two P-channel Metal Oxide Semiconductor (PMOS) tubes and two NMOS tubes. The two PMOS tubes may include a PMOS tube QA and a PMOS tube QC. The two NMOS tubes may include an NMOS tube QB and an NMOS tube QD. The PMOS tube QA and the PMOS tube QC may form an upper bridge arm of an H-bridge, and the PMOS tube QB and the PMOS tube QD may form a lower bridge arm of the H-bridge.

In some embodiments, as illustrated in FIG. 10, the motor drive circuit 31 may include an H-bridge circuit including two PNP triodes and two NPN triodes. The two PNP triodes may include a PNP triode TA and a PNP triode TC, and the two NPN triodes may include an NPN triode TB and an NPN triode TD. The PNP triode TA and the PNP triode TC may form an upper bridge arm of an H-bridge, and the NPN triode TB and the NPN triode TD may form a lower bridge arm of the H-bridge.

In some embodiments, the isolation unit 52 may include the switching power supply circuit 521, as illustrated in FIG. 8. The switching power supply circuit 521 may include a control chip U1, an MOS tube Q3, the high-frequency transformer T1, and a rectifier diode D1. The control chip U1 may be configured to output the PWM drive signal when the input voltage of the switching power supply circuit 521 is detected to reach a starting voltage point. The MOS tube Q3 may be configured to receive the PWM drive signal to enable the switching power supply circuit 521 to be conducted. The high-frequency transformer T1 may be configured to reduce a voltage value of the input voltage and convert the input voltage into an AC voltage. The rectifier diode D1 may be configured to rectify the AC voltage output from the high-frequency transformer T1 into a DC voltage with a stable voltage value. The switching power supply circuit 521 refers to a power supply circuit that controls generation of a pulse voltage through on and off of a switching element in the circuit, s to generate an output voltage through the pulse voltage excitation of the high-frequency transformer T1. In the switching power supply circuit 521 shown in FIG. 8, a pulse voltage may be generated only when the switching element (e.g., the MOS tube Q3) is in the on or off state, and thus the output voltage may be generated. In some embodiments, the MOS tube Q3 may be a PMOS tube, as illustrated in FIG. 8. In some embodiments, the MOS tube Q3 may be an NMOS tube. The PWM drive signal may be configured to control on or off of the MOS tube Q3, thereby connecting or disconnecting the switching power supply circuit.

In some embodiments, a CS pin (i.e., a current detection pin) of the control chip U1 may be configured to detect the input current of the switching power supply circuit 521. The control chip U1 may determine, based on the input current, whether an overcurrent occurs in the output of the switching power supply circuit 521, thus protecting the switching power supply circuit in time.

In some embodiments, the output end of the switching power supply circuit 521 may be electrically connected with the input end of the motor drive circuit 31. A DRV pin (i.e., a drive pulse pin) of the control chip U1 may be electrically connected with a gate drive pin of the MOS tube Q3. An output end of the MOS tube Q3 may be electrically connected with the primary side (i.e., a primary coil side of the high-frequency transformer T1) of the high-frequency transformer T1. The secondary side of the high-frequency transformer T1 may be electrically connected with an input end of the rectifier diode D1. An output end of the rectifier diode D1 may be electrically connected with the motor driver circuit, thereby transmitting the stabile DC voltage to the motor drive circuit 31.

In this embodiment, the DRV pin of the control chip U1 may be electrically connected with the MOS tube Q3. When the control chip U1 detects that the voltage input to the switching power supply circuit 521 reaches the starting voltage point, the control chip U1 may send, through the DRV pin, the PWM drive signal to the MOS tube Q3. The PWM drive signal may be configured to control on or off of the MOS tube Q3 to connect the switching power supply circuit 521 to send the pulse voltage to the high-frequency transformer T1. The pulse voltage may be transmitted to the secondary side of the high-frequency transformer T1 through the primary side of the high-frequency transformer T1 form the AC voltage. The AC voltage may be converted into the stable DC voltage after rectification by the rectifier diode D1.

In some embodiments, as illustrated in FIG. 8, the switching power supply circuit 521 may be a flyback switching power supply circuit. Flyback means that when the switching element (e.g., the MOS tube Q3) is turned on, the secondary side of the high-frequency transformer T1 stops outputting a voltage; in contrast, when the switching element is turned off, the secondary side of the high-frequency transformer T1 outputs the voltage. As mentioned above, in the flyback switching power supply circuit, when the MOS tube Q3 is in the on state, it is considered that the flyback switching power supply circuit is in the off state. In this case, the circuit may have no output voltage. When MOS tube Q3 is in the off state, it is considered that the flyback switching power supply circuit is in the on state. In this case, the circuit may output the voltage.

In some embodiments, the switching power supply circuit 521 may be a forward switching power supply circuit. Forward refers to that when the switching element (e.g., the MOS tube Q3) is in the on state, the secondary side of the high-frequency transformer T1 outputs the voltage; in contrast, when the switching element is in the off state, the secondary side of the high-frequency transformer T1 stops outputting the voltage As described above, in the forward switching power supply circuit, when the MOS tube Q3 is in the on state, it is considered that the forward switching power supply circuit is in the on state. When MOS tube Q3 is in the off state, it is considered that the forward switching power supply circuit is in the off state.

In some embodiments, the rectifier diode D1 may include a Schottky barrier diode, as illustrated in FIG. 8. In some embodiments, the rectifier diode D1 may include a fast recovery diode.

In some embodiments, the switching power supply circuit 521 may further include an isolation optocoupler. The isolation optocoupler may be configured to connect two portions of the circuit to be isolated. Since the isolation optocoupler enables unidirectional transmission of the signal, the isolated two portions of the circuit may be electrically isolated. Merely by way of example, as illustrated in FIG. 8, the isolation optocoupler U2 may be disposed between the control chip U1 and the rectifier diode D1. The control chip U1 may be located at an input end of the switching power supply circuit 521. The rectifier diode D1 may be located at an output end of the switching power supply circuit 521. The isolation photocoupler U2 may be configured to isolate the output end from the input end of the switching power supply circuit 521, preventing interference between the input end and the output end due to electrical connection. In some embodiments, the input end of the isolation optocoupler U2 may be electrically connected with the output end of the rectifier diode D1, and the output end of the isolation optocoupler U2 may be electrically connected with an FB pin (i.e., an output voltage feedback pin) of the control chip U1.

In some embodiments, the isolation optocoupler U2 may include a PCB. Since the PCB board is made of an insulating material, a surface of the PCB may serve as an insulating surface when the isolation optocoupler U2 is energized. In some embodiments, an electrical creepage distance of the isolation optocoupler U2 may be adjusted by changing a surface structure of the PCB. For example, a recess or a bump may be disposed on the surface of the PCB. By disposing the recess and the bump, a distance from one end to another end via the surface of the PCB may be increased, and thus the electrical creepage distance of the isolation optocoupler U2 may be increased, finally increasing the electrical creepage distance of the isolation unit 52. In some embodiments, an insulating material (e.g., silicone, fiberglass, ceramic, etc.) may be arranged on the PCB to increase the electrical creepage distance and an electrical clearance of the isolation optocoupler U2. In some embodiments, the electrical clearance of the isolation optocoupler U2 may be increased by increasing an insulation level of the material used to make the isolation optocoupler U2.

In some embodiments, as illustrated in FIG. 8, the switching power supply circuit 521 may further include a voltage stabilizer chip U3. The voltage stabilizer chip U3 refers to a chip that causes the circuit to output a constant voltage for stabilizing the output voltage of the switching power supply circuit 521. By setting the voltage stabilizer chip U3, the entire switching power supply circuit 521 may be stabilized to output the constant voltage, thereby protecting the entire circuit. In addition, the voltage stabilizer chip U3 may also realize voltage transformation. For example, when the voltage value of the switching power supply circuit 521 is too large, the voltage stabilizer chip U3 may reduce the voltage to prevent the excessive voltage from burning out the switching power supply circuit 521.

Merely by way of example, as illustrated in FIG.8, an input end of the voltage stabilizer chip U3 may be electrically connected with the output end of the rectifier diode D1, and an output end of the voltage stabilizer chip U3 may be electrically connected with the FB pin of the control chip U1 through the isolation optocoupler U2. When the rectifier diode D1 outputs a voltage, the voltage stabilizer chip U3 may detect whether the voltage reaches a voltage stabilizer threshold, and send, based on a detection result, a feedback signal to the control chip U1. The control chip U1 may adjust the duty cycle of the output PWM drive signal based on the feedback signal, then adjust the voltage of the secondary output of the high-frequency transformer T1, and finally obtain an adjusted output voltage. Merely by way example, when the input voltage of the switching power supply circuit 521 remains constant, if the output voltage (i.e., the voltage output from the rectifier diode D1) of the switching power supply circuit 521 reaches the voltage stabilizer threshold, the voltage stabilizer chip U3 may send a first feedback signal to the control chip U1. The first feedback signal may instruct the control chip U1 to maintain the duty cycle of the PWM drive signal. If the output voltage of the switching power supply circuit 521 exceeds the voltage stabilizer threshold, the voltage regulator chip U3 may send a second feedback signal to the control chip U1. The second feedback signal may instruct the control chip U1 to reduce the duty cycle of the PWM drive signal, thereby reducing the output voltage of the high frequency transformer T1. If the output voltage of the switching power supply circuit 521 does not reach the voltage stabilizer threshold, the voltage stabilizer chip U3 may send a third feedback signal to the control chip U1. The third feedback signal may instruct the control chip U1 to increase the duty cycle of the PWM drive signal, thereby increasing the output voltage of the switching power supply circuit 521.

In some embodiments, as illustrated in FIGs. 11-12, a PV subarray (or referred to as a PV array, an array) refers to a subarray including a plurality of rows of PV bracket. A row of PV brackets may include a plurality of PV components (e.g., the plurality of PV components 511 in FIG. 7) connected in series. In some embodiments, a PV sub-array communication system 60 may serve as a host of the PV subarray to communicate with a controller of the PV subarray to monitor the PV subarray. Controller information refers to information reflecting an operating status of the controller. In some embodiments, the controller information may include an operating mode, a target angle, a current angle, an input voltage, a bus voltage, a motor current, fault alarm information, etc. The operating mode may include the controller being in a standby state, the controller being in an operating state, or the like. The current angle may be an angle between a front or a back of a current PV panel and the ground plane. The input voltage refers to an output voltage of an isolation unit (e.g., isolation unit 52 in FIG. 1) of the controller. The bus voltage refers to an input voltage of a driver module (e.g., the driver module 30 in FIG. 1) of the controller. The motor current refers to current output from a motor of the drive module 30. The fault alarm information refers to alarm information when the controller has a fault. For example, the fault alarm information may be information of a rotation axis of the PV bracket being unable to rotate, motor overcurrent, etc.

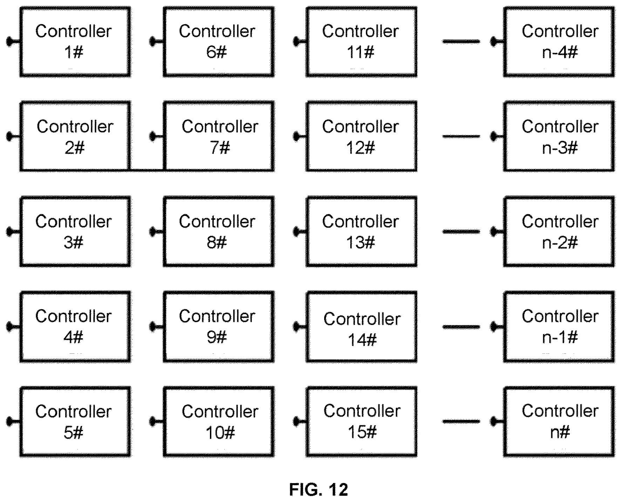

FIG. 12 is a schematic diagram illustrating a deployment of a controller according to some embodiments of the present disclosure. As illustrated in FIG. 12, a controller matrix may include a plurality of controllers (e.g., controller 1# to controller n#) independent of the other. One controller may be configured to control one or more PV components (e.g., the plurality of PV components 511 in FIG. 7). For example, one controller may control a rotation axis of one PV panel to rotate. As another example, one controller may control rotation axes (e.g., the rotation axes in FIG. 5) of a row of PV panels to rotate.

In some embodiments, the PV subarray communication system 60 may also communicate with an irradiator and a wind speed sensor to obtain irradiation data and wind speed data to be transmitted to the plurality of controllers to determine a target angle. Descriptions regarding determining the target angle may be found in FIGs. 2-6 and descriptions of embodiments thereof.

In some embodiments, the PV subarray communication system 60 may obtain controller information from the plurality of controllers and store the controller information so that the plurality of controllers may be subsequently controlled based on the controller information. In some embodiments, the PV racking tracking system 10 may include a background monitoring system. The background monitoring system may communicate with the PV sub-array communication system 60. The PV sub-array communication system 60 may transmit the controller information to the background monitoring system so that the controller information may be monitored in the background through the background monitoring system. In some embodiments, the background monitoring system may include an upper computer. The upper computer may include a display. The display may be configured to display the controller information stored in the background monitoring system. In some embodiments, the PV subarray communication system 60 may serve as a relay between the background monitoring system and the controller to transmit a control command from the background monitoring system to the controller. For example, when a process of transportation and maintenance requires to lay the PV panels flat to create a better condition for passage of construction machinery, the background monitoring system may send a laying flat command to the controller. The controller may receive the command to drive the motor to make the PV panels to a flat position.

The beneficial effects of the PV bracket tracking system provided in the present disclosure include, but are not limited to, the following beneficial effects. (1) By combining one or more of the geographic location, the historical meteorological information, the historical irradiation information, the PV array device information, the PV array mounting arrangement information, the current meteorological information, the current irradiation information, the ground material information, the current time, the current cloud cover distribution information, and the environmental information, the target angle for north-south tracking can be determined from multiple dimensions, which can effectively avoid the influence caused by the situation that different target angles exhibit different power generation gains relative to different solar altitude angles, thereby effectively improving the power generation of the PV panels; (2) by combining one or more of the geographic location, the historical meteorological information, the historical irradiation information, the PV array device information, the PV array mounting arrangement information, the current meteorological information, the current irradiation information, the ground material information, the current time, the current cloud cover distribution information, and the environmental information, the target angle for north-south tracking can be determined from multiple dimensions, then iterations can be performed through the output results of the simulation model, the tilt angle corresponding to the maximum daily power generation can be used as the target angle, thereby further increasing the power generation of the PV panels; (3) the electrical output parameters of the PV panels corresponding to different PV panel tilt angles can be calculated through the simulation model, and then the tilt angle corresponding to the maximum daily power generation can be used as the target angle, thereby improving the accuracy of the calculation results, and effectively improving the power generation of the PV panels; (4) by dividing the target time period into a plurality of time units, the power generation data of PV panels in the target time period can be refined, making the tracking granularity of the PV bracket smaller, which is in turn conducive to more refined control of the target angle for north-south tracking of the PV bracket, thereby improving power generation efficiency; (5) since the PV bracket tracking system draws power directly from the PV string without external small PV components or energy storage devices, reducing a count of mounting components; in addition, the deployment manner is more convenient, and the connection is more concise, thus achieving the purpose of saving the device cost, mounting cost, and operation and maintenance cost; in addition, since the PV bracket tracking system is not powered by the external small PV components or the energy storage devices, the natural loss of the energy source is smaller and the service life is longer; (6) as the PV bracket tracking system is powered directly from the PV strings, power can be provided for angle adjustment even under cloudy and rainy weather conditions, as long as the PV panels can receive the solar radiation; meanwhile, after the first mounting and deployment of the PV panels, the PV panels can provide the electrical energy for the PV bracket tracking system on the same day, thus realizing the angle adjustment of the PV panels; (7) the motor drive circuit adopts the two-phase H-bridge circuit, which has a higher switching frequency and power density; (8) as the switching frequency of the motor drive circuit is larger, the harmonics of the motor of the motor drive circuit can be reduced, so as to make the heat of the motor lower and the motor loss lower; and (9) since the motor drive circuit provided in the present disclosure has a relatively high switching frequency, the harmonics of the motor, the heat of the motor, and the loss of the motor can be reduced while enabling the speed regulation process of the motor to be smoother.

The foregoing descriptions are only preferred embodiments of the present disclosure, and are not intended to limit the present disclosure, and any modifications, equivalent replacements, and improvements, etc. made within the spirit and principles of the present disclosure shall be included in the scope of protection of the present disclosure.

## Claims

1. A photovoltaic (PV) bracket tracking system, comprising:

   an angle determination module configured to determine a target angle for tracking a PV bracket;
   a drive module configured to drive the PV bracket to rotate according to the target angle;
   a control module in communication connection with the angle determination module, the control module being configured to send a control instruction to the drive module; and
   a power supply module configured to supply power to the drive module and the control module.

2. The PV bracket tracking system of claim 1, wherein the power supply module includes a PV string and an isolation unit, the PV string includes a plurality of PV components, an input end of the isolation unit is electrically connected with at least one of the plurality of PV components, and an output end of the isolation unit is electrically connected with the drive module and the control module, respectively.

3. The PV bracket tracking system of claim 2, wherein the isolation unit includes a high-frequency transformer, and a winding wire of the high-frequency transformer includes a double insulated conductor.

4. The PV bracket tracking system of claim 2 or 3, wherein:

   the drive module includes a motor drive circuit, an input end of the motor drive circuit is electrically connected with the output end of the isolation unit;
   a power density of the motor drive circuit is no less than 0.5 W/ cm3; or
   a switching frequency of the motor driving circuit is greater than 100 kHz.

5. The PV bracket tracking system of any one of claims 2-4, wherein the isolation unit includes a switching power supply circuit, and the switching power supply circuit includes:

   a control chip configured to output a pulse width modulation (PWM) drive signal when an input voltage is detected to reach a starting voltage point;

an MOS tube configured to receive the PWM drive signal to enable the switching power supply circuit to be conducted;
a high-frequency transformer configured to reduce a voltage value of an input voltage and convert the input voltage into an alternating current (AC) voltage; and
a rectifier diode configured to rectify the AC voltage into a direct current (DC) voltage with a stable voltage value.

6.  The PV bracket tracking system of any one of claims 1-5, wherein the angle determination module includes an angle calculation unit, the angle calculation unit is configured to determine a target angle based on one or more of a geographic location, historical meteorological information, historical irradiation information, PV array device information, PV array mounting arrangement information, current meteorological information, current irradiation information, ground material information, a current time, current cloud cover distribution information, and environmental information.

7.  The PV bracket tracking system of claim 6, wherein the angle calculation unit is configured to determine, using a first preset algorithm, the target angle based on one or more of the geographic location, the historical meteorological information, the historical irradiation information, the PV array device information, the PV array mounting arrangement information, the current meteorological information, the current irradiation information, the ground material information, the current time, the current cloud cover distribution information, and the environmental information.

8.  The PV bracket tracking system of claim 7, wherein:

the first preset algorithm includes a simulation model, and an output of the simulation model includes power generation data in a target time period;
the angle calculation unit is further configured to determine the target angle in the target time period based on the power generation data; or
the first preset algorithm includes an iterative algorithm.

9.  The PV bracket tracking system of claim 8, wherein the target time period includes a plurality of time units, and the output of the simulation model further includes a plurality of sets of unit power generation data corresponding to the plurality of time units; and the angle calculation unit is further configured to determine the power generation data in the target time period based on the plurality of sets of unit power generation data.

10. The PV bracket tracking system of claim 8 or 9, wherein an input of the simulation model includes set data, fixed data, and current detection data; the set data includes at least a PV panel tilt angle, a PV panel position, and a PV panel circuit parameter; the fixed data includes the historical irradiation information; the current detection data includes the current irradiation information and the environmental information; and
the simulation model is configured to determine, based on the set data, the fixed data, and the current detection data, electrical output parameters of PV panels corresponding to different PV panel tilt angles at the different PV panel tilt angles.

11. The PV bracket tracking system of claim 10, wherein the simulation model includes:

an inverter parameter model configured to determine AC output parameters based on the electrical output parameters of the PV panels; and
a transformer parameter model configured to determine grid-connected point electrical output parameters corresponding to the different PV panel tilt angles based on the AC output parameters.

12. The PV bracket tracking system of any one of claims 6-11, wherein:

solar position information includes a solar altitude angle and a solar azimuth angle, and
the angle calculation unit is further configured to:

determine, using a second preset algorithm, an inverse shadow occlusion angle based on the solar altitude angle, the solar azimuth angle, and sizes and layout information of the PV panels; and
determine the target angle based on the inverse shadow occlusion angle.

13. The PV bracket tracking system of claim 12, wherein the angle calculation unit is further configured to determine, using the second preset algorithm, the inverse shadow occlusion angle based on the solar altitude angle, the solar azimuth angle, and the sizes and the layout information of the PV panels by:

> determining the current time based on the solar altitude angle and the solar azimuth angle;
> if the current time is in the morning, determining a morning inverse shadow occlusion angle based on a first shadow angle formula; and
> if the current time is in the afternoon, determining an afternoon inverse shadow occlusion angle based on a second shadow angle formula.

14. The PV bracket tracking system of any one of claims 6-13, wherein the angle calculation unit is configured to determine the target angle based on one or more of the geographic location, the historical meteorological information, the historical irradiation information, the PV array device information, the PV array mounting arrangement information, the current meteorological information, the current irradiation information, the ground material information, the current time, the current cloud cover distribution information, and the environmental information by:
switching between a first preset algorithm and a second preset algorithm based on the meteorological information to determine the target angle.

15. The PV bracket tracking system of claim 14, wherein:

> the meteorological information includes a weather condition, a sunlight scattering ratio, and a direct sunlight ratio, and the weather condition includes a cloudy day and a sunny day;
> if the weather condition is the cloudy day and/or the sunlight scattering ratio is greater than a scattering ratio threshold, the first preset algorithm is switched on; and
> if the weather condition is the sunny day and/or the direct sunlight ratio is greater than a direct sunlight ratio threshold, the second preset algorithm is switched on.

<u>10</u>

FIG. 1

√ Direct irradiation
(kW/m²)
√ Scattering irradiation
(kW/m²)
√ Ground reflection
coefficient

√ Solar altitude
angle
√ Solar azimuth
angle

PV array
mounting
manner

√ Total solar
irradiance
received by
a surface of
a PV
component
(kW/m²)

√ Incident
angle of
sunlight on
the surface
of the
component
√ Scattering
Irradiation
(kW/m²)

√ PV
component
model
√ PV
component
series-parallel
model
√ Component
heat dissipation
condition

√ Environmental
temperature
√ Battery PN
junction
temperature
at a previous
moment
√ Wind speed

√ Electrical power,
voltage, and current
output by a PV array

√ DC collector cable

√ Inverter DC side
input power

√ Inverter AC side
output

√ AC cable, line
√ Transformer model

√ Inverter model

√ Grid-connected
point AC output
power, current

**FIG. 2**

26

Project location
Longitude
Latitude

Historical irradiance data
Horizontal surface direct irradiation
Horizontal surface diffuse irradiation

Component Selection
Component tilt angle
Mounting parameters
Reflection coefficient

Component surface irradiance data
Tilted surface direct irradiation
Tilted surface diffuse irradiation
Tilted surface reflected irradiation

Component model
Series-parallel model
Temperature
Wind speed

Component output parameters
Voltage parameter
Current parameter
Power parameter

Temperature
Wind speed

DC collector line model

Grid-connected point parameters
Current parameter
Power parameter

Transformer model

Transformer input parameters
Current parameter
Power parameter

AC collector line model
Temperature
Wind speed

Inverter output parameters
Current parameter
Power parameter

Inverter model

Inverter input parameters
Voltage parameter
Current parameter
Power parameter

FIG. 3

**FIG. 4**

**FIG. 5**

**FIG. 6**

**FIG. 7**

FIG. 8

FIG. 9

FIG. 10

FIG. 11

FIG. 12